(19) Europäisches Patentamt
European Patent Office
Office européen des brevets

(11) **EP 2 903 709 B1**

(12) **EUROPÄISCHE PATENTSCHRIFT**

(45) Veröffentlichungstag und Bekanntmachung des Hinweises auf die Patenterteilung:
**05.12.2018 Patentblatt 2018/49**

(21) Anmeldenummer: **13785367.7**

(22) Anmeldetag: **01.10.2013**

(51) Int Cl.:
*F04B 39/00* (2006.01)   *F25B 19/00* (2006.01)
*B01D 8/00* (2006.01)   *F04B 37/08* (2006.01)
*F16F 15/04* (2006.01)   *F25D 19/00* (2006.01)

(86) Internationale Anmeldenummer:
**PCT/EP2013/070485**

(87) Internationale Veröffentlichungsnummer:
**WO 2014/053513 (10.04.2014 Gazette 2014/15)**

(54) **ANORDNUNG UND VERFAHREN FÜR DIE DÄMPFUNG VON SCHWINGUNGEN BEI MIKROSKOPISCHEN UNTERSUCHUNGEN**

ARRANGEMENT AND METHOD FOR DAMPING VIBRATIONS DURING MICROSCOPIC EXAMINATIONS

SYSTÈME ET PROCÉDÉ DESTINÉS À AMORTIR DES VIBRATIONS LORS D'ANALYSES MICROSCOPIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2012 DE 102012019688**

(43) Veröffentlichungstag der Anmeldung:
**12.08.2015 Patentblatt 2015/33**

(73) Patentinhaber: **Life Science Inkubator Sachsen GmbH & Co. KG**
**01307 Dresden (DE)**

(72) Erfinder: **ROSCHER, Dietrich**
**98693 Ilmenau (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**EP-A1- 0 019 426    DE-A1-102007 022 121**
**US-A- 4 363 217    US-A- 4 394 819**
**US-A- 4 745 761    US-A- 5 129 232**

EP 2 903 709 B1

## Beschreibung

Die Erfindung betrifft eine Anordnung und ein Verfahren für die Dämpfung von Schwingungen bei mikroskopischen Untersuchungen von anorganischen und organischen Materialproben bei tiefen Temperaturen. Es hat sich gezeigt, dass bei tiefen Temperaturen durch die Vermeidung von so genannten Quencheffekten Fluoreszenzen verstärkt werden und sogar zum Teil auf den Zusatz von Kontrast erhöhenden Fluoreszenzfarbstoffen zur Probe verzichtet werden kann.

Die Vermeidung zum Teil toxischer Fluoreszenzfarbstoffe ist bei organischen Proben vorteilhaft, da durch derartige Farbstoffe das Analyseergebnis verfälscht werden kann. Für derartige Untersuchungen ist es weiterhin vorteilhaft, handelsübliche Lasermikroskope verwenden zu können, die zur Grundausstattung vieler Labore gehören und die nicht speziell für Tieftemperaturuntersuchungen ausgelegt sind.

Die Verwendung dieser Mikroskope erfordert, dass eine spezielle Messzelle mit ausreichend geringer Bauhöhe, in der sich die eigentliche Probe befindet, zwischen Mikroskopobjektiv und Mikroskoptisch in den Strahlengang des Mikroskops angeordnet wird. Die Messzelle sollte zudem mit dem Koordinatenantrieb des Mikroskoptisches koppelbar sein und einfach entfernt werden können.

Für die Kühlung der Proben auf Temperaturen kleiner 100K, zum Teil bis auf 4K haben sich elektromechanische Kryokühler bewährt, da deren geschlossene Heliumkreisläufe eine kostenaufwändige Nachversorgung mit Helium vermeiden. Unvermeidlicher Nachteil elektromechanischer Kryokühler sind Vibrationen, die durch die Verdichtung des Heliums und Pumpen für die Erzeugung eines Vakuums für die Kälteisolation eingeleitet werden. Für mikroskopische Untersuchungen sind Vibrationen kleiner 10 nm wünschenswert, um einen Verlust an optischer Auflösung zu vermeiden.

Bekannt sind elektromechanische Kryokühler mit relativ geringerer Vibration beispielsweise Pulsrohrkühler. Prinzip bedingt treten aber auch hier durch den bewegten Verdichterkolben Vibrationen auf. Bezogen auf die Schwingungen des Kaltkopfes des Kryokühlers auf die Schwingungsamplitude des Probenhalters sind Dämpfungen von 60 bis 80 dB erforderlich. Erschwerend kommt hinzu, dass auch das Gehäuse des Kryokühlers Vibrationen erzeugt, die sich über die Befestigungselemente auf den Instrumententisch sowie über das Gehäuse der Messzelle auf das Mikroskopstativ bzw. Mikroskoptisch verbreiten. Da sich auf dem Instrumententisch gegebenenfalls weitere empfindliche Instrumente befinden, ist die Einleitung von Schwingungen auf den Instrumententisch unerwünscht.

Erforderlich sind deshalb drei ineinander geschachtelte Dämpfungssysteme, die einmal die durch ein Vakuum isolierte Leitung der Kälte auf die Probe in einer Messzelle betreffen, zum anderen aber das Fernhalten von Vibrationen auf den Instrumententisch und das Mikroskop beinhalten.

Üblicherweise schwingen Kryokühler bedingt durch die Bewegung des Verdichterkolbens bei einer Grundfrequenz von 1 ... 5 Hz, wobei an den beiden Endpunkten der Kolbenbewegung beim Anschlag an das Verdichtergehäuse Vibrationen je nach Ausführung der Anschlagsdämpfer im Kryokühler in der Größenordnung von typisch im Bereich von 50 Hz bis 100 Hz auftreten. Ein optimales Dämpfungssystem sollte deshalb sowohl die Bewegungsfrequenz des Verdichterkolbens als auch die durch den Anschlag entstehende Vibrationsfrequenz sowie Schwingungen der Gassäule unterdrücken.

Im Zusammenhang mit dem Einsatz mechanischer Kryokühler beispielsweise für die Elektronenmikroskopie sind verschiedene Anordnungen bekannt, um den Einfluss von Vibrationen zu verringern, die den Kälteleiter aber auch das Gehäuse betreffen.

Stand der Technik ist es, den Kälteleiter, der sich zwischen dem Kaltkopf des Kryokühlers und der Probe befindet, beispielsweise durch flexible Kupferlitzen (US 4,161,747) oder Gasfedern mit einem Kälte übertragenden Gas zu entkoppeln. Diese Litzen können bei entsprechend dünnen Durchmessern der Einzeldrähte sehr nachgiebig ausgeführt sein, sodass eine Schwingungsübertragung weitgehend unterdrückt wird.

Wesentlich schwieriger ist es, den Einkopplung der energiereichen Gehäuseschwingungen des Kryokühlers auf den Instrumententisch bzw. das Mikroskop zu reduzieren. In der Schrift US 4,745,761 werden diese Schwingungen durch Elastomermatten gegenüber der Grundplatte gedämpft, die durch die Verschraubung des Gehäuses mit der Grundplatte zusammengepresst werden. Die Schwingungsübertragung auf einen Gammastrahlendetektor wird durch einen elastischen Membranbalg zwischen dem Gehäuse des Kryokühlers und einer Befestigungsplatte für den Detektor reduziert, die ebenfalls über elastische Elastomermatten mit der Basisplatte verbunden ist. Der Kälteleiter wird durch Litzen hinsichtlich der Weiterleitung von Schwingungen entkoppelt.

Die in der Schrift US 4,745,761 vorgeschlagene Lösung für die Schwingungsdämpfung eines Gammastrahlendetektors ist jedoch bezogen auf eine Messzelle für die Mikroskopie entsprechend der Aufgabenstellung der vorliegenden Erfindung nur bedingt übertragbar, da die Befestigungsplatte für den Detektor durch die elastische Anbindung an die Grundplatte Eigenschwingungen durchführen kann. Zudem werden die die zur Dämpfung vorgesehenen Elastomermatten durch den Einfluss des Luftdrucks zusammengedrückt und verlieren ihre elastischen Eigenschaften

Eine andere Art der Schwingungsentkopplung zwischen den Kryokühler und einem Rezipienten ist in der US 4,394,819 dargestellt. Der Rezipient befindet sich in einer fest mit einer Grundplatte verbundenen Messzelle. Die Kälte wird von einem Kaltkopf auf den Rezipienten durch eine flexible Verbindung übertragen. Der Kryokühler ist zwischen zwei als Membranbälge ausgeführte Federn schwimmend aufgehängt. Die Membranbälge erfüllen dabei eine Doppelfunktion. Zum einen besitzen sie die Funktion einer Feder. Zum anderen umhüllen die Membranbälge eine evakuierte Kammer, der zur Kälteisolierung des Kälteleiters dient. Die statischen Kräfte, die durch den Luftdruck hervorgerufen werden und die Kammern zusammen drücken, heben sich durch die gewählte Anordnung gegenseitig auf. Die Schwingung des Kryokühlers wird durch Dämpfungselemente beeinflusst, die zwischen der Grundplatte und dem Gehäuse des Kryokühlers wirken. Die Dämpfungselemente reduzieren zwar die Vibration des Kryokühlergehäuses, ein Teil der Bewegungsenergie ruft jedoch Gegenkräfte und. Schwingungen der Grundplatte hervor.

Die Masse des Kryokühlers bildet zusammen mit den Federeigenschaften der Membranbälge ein gedämpftes Feder-/Massesystem, mit einer ausgeprägten Eigenfrequenz. Die dämpfenden Eigenschaften einer federnden Aufhängung eines Schwingkörpers lassen sich verbessern, wenn, wie in der Schrift AT 001 975 beschrieben, mehrere federnde Bereiche mit unterschiedlichen Elastizitäts- und Dämpfungseigenschaften in Reihe angeordnet werden. Die Dämpfungselemente sind dabei parallel zu den Federn angeordnet und wirken kräftemäßig ebenfalls direkt auf die Grundplatte.

Bekannt sind auch aktive Schwingungsdämpfungssysteme. In der Schrift US 5,582,013 wird vorgeschlagen, auf den Kryokühler eine Kraft einwirken zu lassen, die den Vibrationskräften des Kryokühlers um 180° phasenverschoben ist und in Betrag gleich ist. Die Erzeugung dieser Gegenkräfte erfolgt durch einen Antrieb einer Gegenmasse, die sich relativ zum Kryokühler bewegen kann. Betrag und Phase der Gegenkräfte wird aus einem Sensorsignal abgeleitet. Die Interpretation des Sensorsignals ist schwierig, da die spektrale Leistungsdichte der Vibration des Kryokühlers interpretiert werden muss. Diese Leistungsdichte ändert sich im Betriebsablauf und ist unter anderem abhängig von der Temperatur des Kaltkopfes.

Das Problem der Interpretation des Sensorsignals wird in der Schrift US 6,131,394 dadurch gelöst, dass ein an der Messzelle angeordneter Schwingungssensor Teil eines Regelkreises ist, wobei die Parameter der Übertragungsfunktion je nach Betriebszustand geändert werden. Die Signalaufbereitung erfolgt durch einen Signalprozessor und ist deshalb erforderlich, weil die Zusammenhänge zwischen Schwingungen an der Messzelle bzw. Probe in einem komplizierten Zusammenhang mit der notwendigen Antriebskraft an der Gegenmasse stehen. Die vorgeschlagene Lösung kompensiert zwar die Schwingungen an der Probe, keine Lösung ist aber zur Reduzierung der Schwingungen über die Befestigung des Kryokühlers abzuleiten.

Weiterhin wurde im Zusammenhang mit einer aktiven Geräuschunterdrückung in der Schrift DE 39 16 032 vorgeschlagen, mehrere Regelkreise für die Erzeugung einer Gegenschwingung hintereinander zu schalten. Jedoch ist auch dieser Schrift keine Lösung für die drei ineinander geschachtelte Dämpfungssysteme zu entnehmen, die sowohl die Leitung der Kälte auf die Probe in einer Messzelle betreffen, als auch das Fernhalten von Vibrationen auf den Instrumententisch und das Mikroskop sichern.

Die Aufgabe der Erfindung besteht darin, eine Anordnung zur mikroskopischen Untersuchung von anorganischen und organischen Materialproben, die durch einen elektromechanischen Kryokühler gekühlt werden, vorzuschlagen, bei dem die Weiterleitung von Schwingungen des Kryokühlers sowohl auf die Probe, auf den Mikroskoptisch als auch auf den Instrumententisch unterdrückt wird.

Die Lösung der Aufgabe erfolgt mit den Merkmalen der Ansprüche 1 und 13.

Vorteilhafte Ausgestaltungen der Erfindung sind in den Unteransprüchen angegeben.

Die Anordnung für die Dämpfung von Schwingungen bei mikroskopischen Untersuchungen von Proben in einer evakuierten Messzelle bei tiefen Temperaturen umfasst, eine Kryokühleinheit und eine Mikroskopiereinheit umfasst, die mit einer Dämpfungseinheit kombiniert sind,wobei die Dämpfungseinheit entlang einer Längsachse eine Reihenanordnung von vier aneinander gekoppelten evakuierbaren Kompensationskammern aufweist,, die an ihren beiden äusseren Enden über Dämpfer mit einem Gestell verbunden sind und wobei die Messzelle mit zwei Kompensationskammern an Koppelstellen verbunden ist, wobei eine Spanneinheit an mindestens zwei Stellen der Reihenanordnung wirkmäßig mit der Dämpfungseinheit verbunden ist und dass der Kryokühler an einem Koppelverbinder befestigt ist, der zwei Kompensationskammern miteinander verbindet und jede der beiden Kompensationskammern über jeweils einen weiteren Koppelverbinder und/oder eine Verbindungsplatte mit jeweils einem der Dämpfer verbunden ist, der an dem Gestell befestigt ist und die Spanneinheit auf die beiden Koppelverbinder wirkt.

Das Verfahren zur Dämpfung von Schwingungen bei mikroskopischen Untersuchungen von Proben in einer evakuierten Messzelle bei tiefen Temperaturen umfasst eine Kryokühleinheit und eine Mikroskopiereinheit umfasst, die mit einer Dämpfungseinheit kombiniert sind, wobei die Dämpfungseinheit entlang einer Längsachse eine Reihenanordnung von vier aneinander gekoppelten evakuierbaren Kompensationskammern aufweist, die an ihren beiden äusseren Enden über Dämpfer, von denen mindestens zwei diametral wirken, mit einem Gestell verbunden sind , und wobei die Messzelle mit zwei Kompensationskammern an Koppelstellen verbunden ist, wobei mindestens zwei der in Reihe angeordneten Kompensationskammern durch eine Spanneinheit überbrückt werden,durch die Spanneinheit auf Koppelstellen der Reihenanordnung Kräfte ausgeübt werden und die Spanneinheit auf die mit dem Gestell verbundenen Dämpfer wirkt.

Hierbei erfolgt eine jeweils gesonderte federnde Aufhängung des Kryokühler-Gehäuse und der Messzelle in einer Reihenanordnung von Feder- und Dämpfungselementen. Zumindest für die Zeitdauer der Messung ist die Messzelle fest mit dem Mikroskoptisch verbunden, sodass dessen Koordinatenantrieb für die Positionierung der Probe im Strahlengang des Mikroskops genutzt werden kann.

In einer Ausgestaltung der Erfindung ist die Spanneinheit hinsichtlich der auf die Koppelverbinder wirkenden Spannkraft verstellbar ausgebildet.

Vorteilhafterweise kann nun der Arbeitspunkt des Dämpfungselementes, gebildet aus den Koordinatenwerten $F_V$ und $x_V$, in einen optimalen Bereich gelegt werden, in dem die Vibrationsenergie des Kryokühlers maximal absorbiert, das heißt in Wärme umgewandelt wird.

In einer weiteren Ausgestaltung ist die Anordnung dadurch gekennzeichnet, dass die Spanneinheit über eine Spannfeder verfügt, so dass damit die auf die Koppelverbinder wirkende Spannkraft (weitgehend) unabhängig von den Schwingungsamplituden an den Koppelverbindern ist. Damit wird erreicht, dass die Stabilität des Arbeitspunktes erhalten bleibt.

In einer weiteren vorteilhaften Ausbildung umfasst die Spanneinheit mindestens eine Vorspannfeder, Druckbolzen und Spannschraube.

Eine weitere vorteilhafte Weiterbildung der Erfindung ist dadurch gekennzeichnet, dass der Kryokühler an einem Koppelverbinder befestigt ist, der zwei Kompensationskammern miteinander verbindet und jede der beiden Kompensationskammern über jeweils einen weiteren Koppelverbinder mit diametral angeordneten Dämpfern verbunden ist und die Spanneinheit auf die beiden Koppelstellen wirkt. Der Vorteil besteht in einer symmetrische Ausbildung bezogen auf den schwingenden Kryokühler insbesondere dann, wenn die Parameter jeweils der beiden Kompensationskammern und jeweils der beiden Dämpfer identisch sind.

Eine weitere Ausgestaltung der Erfindung besteht darin, dass ein Koppelverbinder der Reihenanordnung von Kompensationskammern und Dämpfungselementen mit dem Kryokühlergehäuse und ein anderer Koppelverbinder mit einer Ausgleichsmasse verbunden sind. Mit diesem zusätzlichen Dämpfungsmittel wird vorteilhafterweise eine Unterdrückung höher frequenter Schwingungen erreicht.

Eine Weiterbildung sieht vor, dass mindestens ein Koppelverbinder der Reihenanordnung von Kompensationskammern und Dämpfungselementen mit mindestens einem Schwingungstilger, der eine Tilgerfeder und eine frei schwingende Tilgermasse) umfasst, verbunden ist. Die Anordnung dieses zusätzlichen Dämpfungselementes führt zu einer Unterdrückung der Grundschwingung.

Eine weitere vorteilhafte Ausgestaltung ist dadurch gekennzeichnet, dass die Wandungen der Kompensationskammern als Balgfedern ausgeführt sind, wobei die Balgfedern der ersten und zweiten Kompensationskammer sowie der dritten und vierten Kompensationskammer jeweils paarweise gleiche Querschnitte und Federkonstanten aufweisen.

In einer weiteren Ausgestaltung ist vorgesehen, dass mehrere Mittel zur Leitung der Kälte von einem Kaltkopf zur Probe vorhanden sind, wobei mindestens eines der Mittel elastisch und/oder plastisch verformbar ist und ein weiteres Mittel mit der Messzelle wärmeisolierend verbunden ist.

Eine Weiterbildung der Erfindung ist dadurch gekennzeichnet, dass die Messzelle zumindest für die Dauer der Beobachtung der Probe mit einem Mikroskoptisch verbunden ist. Damit wird vorteilhafterweise eine absolute Unterdrückung einer Relativbewegung von Probe zum Strahlengang des Mikroskops erreicht.

Eine weitere Ausgestaltung ist dadurch gekennzeichnet, dass die Messzelle ein Messzellenfenster aufweist, das sich im Strahlengang eines Lasermikroskops befindet.

Eine weiterbildende Anordnung ist dadurch gekennzeichnet, dass ein Gestell und die Mikroskopiereinheit auf einer gemeinsamen Instrumentenplattform angeordnet sind, wobei das Gestell relativ zur Mikroskopiereinheit verrückbar oder/und schwenkbar ist.

Die Ausbildung der Dämpfer bzw. Dämpfergruppen als Elastomerdämpfer ist vorteilhafterweise besonders kostengünstig.

Eine vorteilhafte Ausgestaltung des erfindungsgemäßen Verfahrens besteht darin, dass Abmessungen und Material der Dämpfer so bestimmt werden, dass die auf die Dämpfer während des Betriebes des Kryokühlers wirkenden dynamischen Kräfte eine Verformung zwischen minimal 0 bis 20% und maximal 80% - 100% ihrer zulässige Hübe bewirken und dass mittels einer Spanneinheit (400) bei ausgeschalteter Kryokühleinheit (100) eine Verformung von 30 bis 70% des zulässigen Hubs eingestellt wird.

In einer weiteren Ausbildung des Verfahrens werden Abmessungen und Material der Dämpfer so bestimmt, dass die auf die Dämpfer während des Betriebes der Kryokühleinheit wirkenden dynamischen Kräfte eine Verformung zwischen minimal 0 bis 20% und maximal 80% - 100% ihrer zulässigen Verformung bewirken und dass mittels einer Spanneinheit bei ausgeschalteter Kryokühleinheit eine Verformung von 30 bis 70% der zulässigen Verformung eingestellt wird.

Detaillierte Erläuterung der Erfindung

Die translatorische Bewegung des Verdichterkolbens innerhalb eines Kryokühlers sowie das Aufprallen des Verdichterkolbens auf das Gehäuse des zylindrischen Verdichtungsraumes an den Umkehrpunkten verursacht an der Aufhängung des Kryokühlers in einem Rahmen und an der Ankopplung des Kälteleiters Gegenkräfte, die durch die immanente Nachgiebigkeit jeder Art von konstruktiver Ausführung der Aufhängung bzw. Ankopplung Schwingungen erzeugen. Die Schwingungen werden von der Aufhängung an die Instrumententisch und an weitere Geräte z.B. den Fuß und den Tisch des Mikroskops weitergeleitet, obwohl übliche Instrumententische in der Regel schwingungsdämpfend und sehr starr ausgelegt sind.

Dem erfindungsgemäßen Dämpfungssystem liegt die Überlegung zugrunde, durch eine entsprechende Ausgestaltung der Dämpfungsmittel die auf den Instrumententisch und auf den Mikroskoptisch wirkenden Kräfte zu reduzieren, wobei die sich ergebenden Schwingungsamplituden des Kryokühlers im Unterschied zum zitierten Stand der Technik als zweitrangig angesehen werden.

Die durch den Kryokühler verursachten Vibrationen sind leistungsabhängig. Die notwendige Kälteleistung eines elektromechanischen Kryokühlers für die Abkühlung der Probe auf eine Temperatur beispielsweise kleiner 100 K ist abhängig von den Verlusten an Kälte auf dem Weg vom Kaltkopf des Kryokühlers zur Probe. Zudem ist zu berücksichtigen, dass die Probe durch den Fluoreszenz anregenden Laserstrahl erwärmt wird und Wärmestrahlung der Umgebung durch das Fenster in der Messzelle eintritt.

Für die Erreichung von Temperaturen < 10K haben sich zweistufige Kryokühler mit einer Kälteleistung beispielsweise von 100 W in der ersten Stufe und 5 W in der zweiten Stufe als geeignet erwiesen. Kühler dieser Leistungsklasse verursachen an einer starren Aufhängung impulsartige Gegenkräfte in der Größenordnung von beispielsweise 50 N bis 100 N.

Die Frequenzen der an der Aufhängung des Kryokühlers in einem Gestell oder Instrumententisch sowie der am Kaltleiter wirkenden Kräfte werden zunächst durch die Frequenz der Kolbenbewegung bestimmt. Ein Bewegungszyklus mit der Dauer von beispielsweise 500 ms enthält dabei zwei Umkehrpunkte der Bewegung, wobei an den Umkehrpunkten die Geschwindigkeit der Kolbenbewegung auf Null reduziert wird. Die daraus sich ergebende Anregungsfrequenz der Umkehrpunkte (nachfolgend als Umkehrfrequenz bezeichnet) beträgt in diesem Beispiel 4 Hertz.

Um eine Größenordnung höher frequente und energiereichere Schwingungen treten an den Umkehrpunkten der Kolbenbewegung durch den Aufprall auf die Zylinderköpfe auf. In der Literatur sind zwar verschiedene Lösungen bekannt, durch besondere Ausgestaltung von Anschlägen bzw. eine pneumatische Umsteuerung die Wirkung des Impulses beim Abbremsen der Kolbenbewegung auf das Gehäuse zu reduzieren. Entsprechende Anordnungen finden sich beispielsweise in der DE 195 10 620 oder der EP 160 808. Dennoch lassen sich Vibrationen nicht vermeiden, deren Frequenzen um etwa eine Größenordnung höher sind als die der zyklischen Kolbenbewegung.

Weitere Schwingungen entstehen durch Vibration der elastischen Gassäule in Verbindung mit der Masse des Kolbens.

Da die Kolbenbewegung im Kryokühler in Richtung der Längsachse erfolgt, ist es zulässig, das erfindungsgemäße Dämpfungssystem auf Schwingungen in der Längsachse zu begrenzen. Entsprechend dieser Einschränkung besitzen auch die Feder- und Dämpfungselemente zwei diametral gegenüber liegende konstruktive Interfaces, die parallel zur Längsachse des Dämpfungssystems liegen. Allerdings kann entsprechend dem Grundgedanken der Erfindung ein vergleichbares Dämpfungssystem auch für weitere Achsen in einem Koordinatensystem ausgeführt werden.

Aus diesen Zusammenhängen ergeben sich verschiedene Anforderungen an eine Anordnung zur mikroskopischen Untersuchung von anorganischen und organischen Materialproben, die durch einen elektromechanischen Kryokühler gekühlt werden:

◦ Die an den Befestigungsstellen des Netzwerkes von Feder- und Dämpfungselementen auf das Gestell und auf die Messzelle eingeleiteten dynamischen Kräfte sollten so gering wie möglich sein.
◦ Die auf die Koppelstellen von Dämpfungselementen wirkende Kraft sollte einen definierten Wert besitzen, der eine hohe innere Dämpfung bewirkt.
◦ Die Zahl der Gestellverbinder des Netzwerkes sollte minimal sein.
◦ Die statischen Kräfte paarweise angeordneter Kompensationskammern sind durch das Netzwerk ohne Verlust der Wirkung von Dämpfungselementen aufzunehmen.

Erfindungsgemäß wird das Netzwerk aus Feder- und Dämpfungselementen mit einer Spanneinheit kombiniert, die mit Kraft und Gegenkraft auf mindestens zwei verschiedene Koppelverbinder des Netzwerkes wirkt, wobei die Koppelverbinder mindestens zwei Feder- und/oder Dämpfungselemente verbinden, die nicht starr mit dem Gestell verbunden sind.

Entsprechendder Erfindung wird eine gesonderte federnde Aufhängung des Kryokühler-Gehäuse und der Messzelle in einer Reihenanordnung von Feder- und Dämpfungselementen vorgeschlagen. Eine Reihenanordnung liegt vor, wenn jeweils eines der beiden konstruktiven Interfaces eines Feder- und Dämpfungselementes über eine Kupplung mit einem der beiden konstruktiven Interfaces eines zweiten Feder- oder Dämpfungselementes verbunden ist. Eine Parallelanordnung liegt dagegen vor, wenn beide konstruktiven Interfaces eines Feder- oder Dämpfungselementes mit beiden konstruktiven Interfaces eines zweiten Feder- oder Dämpfungselementes verbunden sind. Parallelanordnungen werden beispielsweise im Stand der Technik (vergleiche US 4,363,217 und US 4,745,761) beschrieben.

In einer Ausführung der Erfindung werden die Federn als Kompensationskammern ausgeführt, um gleichzeitig über eine Vakuumisolierung des Kälteleiters zu verfügen. Eine Kompensationskammer besteht aus einem zylindrischen Membranbalg, der durch zwei Platten als konstruktives Interface abgeschlossen wird, wodurch eine geschlossene Kammer entsteht. Die Kammer ist in radiale Richtung steif und kann durch den Luftdruck nur wenig zusammengedrückt werden. In axiale Richtung besitzt die Kammer dagegen eine hohe Nachgiebigkeit und eine hohe federnde Wirkung.

Wird die Kammer evakuiert, bewirkt der Luftdruck ein Zusammenpressen der Kammer in axiale Richtung. Um das zu vermeiden, werden diese Kammern, wie aus dem Stand der Technik bekannt, paarweise mit entgegengesetzter Wirkung eingesetzt. Bei gleichem Querschnitt beider Kammern heben sich die statischen Kräfte auf.

Für eine gesonderte Aufhängung von Kryokühler und Messzelle werden demzufolge vier dieser Kompensationskammern benötigt, deren Wirkung entlang der Längsachse des erfindungsgemäßen Dämpfungssystems gerichtet ist. Dabei ist die Form der Kompensationskammer unerheblich, sofern nur in radiale Richtung eine hohe Steifigkeit ausgebildet ist.

Eine solche Kammer kann auch aus konstruktiven Gründen auf mehrere Kammern mit zwei gemeinsamen konstruktiven Interfaces aufgeteilt werden, sofern der Gesamtquerschnitt dem Querschnitt der Partnerkammer entspricht und die resultierenden Federeigenschaften gleich sind. Die zwischen zwei konstruktiven Interfaces angeordneten Teilkammern können für theoretische Betrachtungen zu einer Ersatzfeder zusammengefasst werden.

Zur Erläuterung der Wirkungsweise wird zunächst die elastische Anbindung des Kryokühlers in einem Rahmen oder Gestell über eine Feder betrachtet, wie sie aus dem Stand der Technik bekannt ist. Bei einer Federkonstanten $C_1$, ergibt sich zusammen mit den Massen des Kryokühlers $m_k$ und der damit fest verbundenen Konstruktionselemente ein Feder-/Masse-System mit der Eigenfrequenz $\omega_k$

$$\omega_k = 2\pi f = \sqrt{\frac{c_1}{m_k}} \qquad\qquad (1)$$

Die bei der Frequenz $\omega_k$ auftretende Resonanzüberhöhung führt zu starken Schwingungen des Kryokühlers, die wirksam durch Dämpfungselemente unterdrückt werden können. Wird das Dämpfungselement nach dem Stand der Technik parallel zur Aufhängefeder angeordnet, das heißt, die konstruktiven Interfaces der Feder werden mit denen des Dämpfungselementes verbunden, wirkt das Dämpfungselement mit einer zusätzlichen Kraft auf das Gestell.

Aus diesem Sachverhalt entsteht ein Konflikt bei der Dimensionierung der Anbindung des Kryokühlers in der Art eines gedämpften Feder-/Massesystems.

Zur Minimierung der auf die Aufhängung wirkenden Kräfte ist einerseits, wie sich theoretisch aufzeigen lässt, die Dämpfung klein zu halten. Das Feder-/Massesystem wirkt dann als Tiefpass, wobei allerdings die Wirkung des Tiefpasses sich auf Frequenzen bezieht, die wesentlich höher als die Eigenfrequenz des Feder-/Massesystems ist. Andererseits kann die Resonanzüberhöhung nur durch eine höhere Dämpfung reduziert werden, jedoch wirken dann auch wieder höhere Kräfte des Dämpfungselementes auf den Aufnahmerahmen.

Erschwerend kommt hinzu, dass die Anregungsfrequenzen des Kryokühlers um eine Größenordnung auseinander liegen. Insbesondere die Dämpfung der Umkehrfrequenz ist schwierig, da ein wirksames Feder-Masse-System Eigenfrequenzen haben sollte, die wesentlich kleiner als die Umkehrfrequenz von beispielsweise 4 Hz sind. Derartige Feder-/Masse-Systeme müssen also über große Massen und entsprechend kleine Federkonstanten verfügen.

Der Erfindung liegt die Erkenntnis zugrunde, dass in der Ausgestaltung eines Dämpfungssystems Dämpfungselemente vermieden werden sollten, die, wie beispielsweise in den Schriften US 4,363,217 und US 4,745,761 dargestellt, direkt eine Kraftwechselwirkung zwischen Kryokühler und Aufnahmerahmen bzw. Instrumententisch erzeugen und damit eine Abbremsung des Kryokühlers bewirken.

Erfindungsgemäß erfolgt die notwendige Dämpfung des Feder-/Massesystems der elastischen Anbindung des Kryokühlers und der Messzelle an den Aufnahmerahmen durch Dämpfungselemente, die in Reihe zu den Anbindungsfedern angeordnet sind. Durch diese Anordnung ist die auf Dämpfungselement und Aufhängefeder wirkende Kraft in Betrag und Richtung gleich. Die Nachgiebigkeiten der Anbindungsfeder und des Dämpfungselementes addieren sich unter Beachtung von Phasenbeziehungen. Die Einstellung einer optimalen Dämpfung, ohne die auf den Rahmen wirkenden Kräfte wesentlich zu erhöhen, ist nun möglich

Für die Anordnung eines zur Anbindungsfeder seriellen Dämpfungselementes gibt es verschiedene Möglichkeiten.

In einer Ausführung der Erfindung werden die Dämpfungselemente seriell zu jeder federnden Kompensationskammer angeordnet. Die Interfaces der Kompensationskammern sind in dieser Ausführungsvariante über Dämpfungselemente beispielsweise in Form von Elastomerdämpfer verbunden.

Bei der Ausgestaltung der Erfindung ist zu beachten, dass durch den paarweisen Einsatz von Kompensationskammern in Längsrichtung erhebliche statische Zugkräfte auftreten, die in der Größenordnung von 1000 N liegen können.

Die in Reihe angeordneten Dämpfungselemente werden diesen Kräften ausgesetzt. Werden beispielsweise Elastomerdämpher verwendet, pressen diese statischen Kräfte den Dämpfer zusammen oder überdehnen diesen. Die dämpfende Wirkung ist in jedem Fall stark eingeschränkt.

Erfindungsgemäß verbinden diametral wirkende Dämpfer die Reihenanordnung von Federelementen mit dem Gestell, wobei durch eine Spanneinheit auf Koppelstellen der Reihenanordnung Kräfte ausgeübt werden, die die Wirkung der statischen Kräfte der Kompensationskammern auf die Dämpfungselemente um einen definierten Betrag reduzieren. Durch entsprechende Dimensionierung der erfindungsgemäßen Spanneinheit kann ein Arbeitspunkt der Dämpfer eingestellt werden, was insbesondere für Elastomerdämpfer vorteilhaft ist.

In einer Ausführung der Erfindung sind besteht die Reihenanordnung in Richtung der Längsachse der Dämpfungseinheit aus einem mit dem Gestell gekoppelten Dämpfer, der mit einer Reihenanordnungen von insgesamt vier Kompensationskammern verbunden ist, die wiederum über einen anderen Dämpfer mit einem diametral gegenüber liegenden Einspannstelle des Gestells verbunden ist. Die Koppelstelle von zwei Kompensationskammern ist mit dem Kryokühlergehäuse, die Koppelstelle der beiden anderen Kompensationskammern ist mit der Messzelle verbunden. Die erfindungsgemäße Spanneinheit überbrückt die Reihenanordnung von vier Kompensationskammern und wirkt auf die beiden diametral gegenüber liegenden Dämpfer.

In einer anderen Ausführung der Erfindung wird das eine Ende der Reihenanordnung von vier Kompensationskammern über einen Dämpfer mit dem Gestell gekoppelt. Ein weiterer diametral wirkender Dämpfer verbindet die Koppelstelle der zweiten und dritten Kompensationskammer, die in keiner direkten Verbindung mit dem Kryokühler oder Messzelle steht, mit dem Gestell. In diesem Fall überbrückt die erfindungsgemäße Spanneinheit nur zwei Kompensationskammern, wirkt aber ebenfalls auf die zwei diametral gegenüber liegende Dämpfer. Die Dämpfer wirken dabei sowohl auf den Kryokühler als auch auf die Messzelle.

Bei Kopplung des Dämpfers mit der zweiten und dritten Kompensationskammer bildet sich eine Kräfteverteilung entsprechend der mechanischen Impedanzen des Dämpfers und der Federwirkung der Kompensationskammern heraus, mit denen die Messzelle gekoppelt ist. Durch hinreichend hohe Nachgiebigkeit beider Kompensationskammern ist der Anteil der auf einen Mikroskoptisch wirkenden Kräfte als Bruchteil der auf das Gestell wirkenden Kräfte des schwingenden Kryokühler zu gestalten.

Durch Vereinigung der Dämpfungsfunktionen in einem Dämpfer kann dieser vorteilhafter und kostengünstiger mit einer hohen Lebensdauer und einer definierten Kennlinie ausgeführt werden als es beim Einsatz von Dämpfern in jeder federnden Kompensationskammer möglich ist.

Die Wirkung von Dämpfern beruht auf einer geschwindigkeits- und/oder beschleunigungsabhängigen Gegenkraft. In der technischen Umsetzung weisen alle Dämpfer aber auch eine Wegabhängigkeit der Gegenkraft auf. Die Wirkung der Spanneinheit besteht darin, dass ein optimaler Arbeitspunkt für den Dämpfer eingestellt werden kann, bei der ein Maximum der Umwandlung von Bewegungsenergie in Wärme bei minimaler Krafteinwirkung auf das Gestell erfolgt.

Die erfindungsgemäße Anordnung kann mit weiteren Dämpfungsmaßnahmen kombiniert werden.

In einer weiteren vorteilhaften Ausgestaltung der Erfindung wird an die Koppelstelle der zwei Kompensationskammern, die mit dem Kryokühler verbunden sind, zugleich ein Schwingungstilger mit einer frei schwingenden Tilgermasse befestigt. Die Verbindung zwischen Tilgermasse und Kryokühler ist dabei so weich ausgelegt, dass die Masse des Schwingungstilgers den Bewegungen des Kryokühlers mit einer gewissen Verzögerung folgt. Der damit einher gehende Energieverbrauch wird der Schwingung entzogen und wirkt damit dämpfend. Eine direkte Krafteinwirkung auf das Gestell erfolgt nicht sondern nur über die seriell angeordneten Feder- und Dämpfungselemente der Reihenanordnung.

Eine weitere Dämpfungsmaßnahme, die vorteilhaft mit der vorliegenden Erfindung kombiniert werden kann, besteht darin, die Koppelstelle der beiden Kompensationskammern, die weder mit dem Kryokühler noch der Messzelle verbunden ist, mit einer Ausgleichsmasse zu verbinden. Dadurch entsteht ein zusätzliches Tiefpasssystem für die Unterdrückung insbesondere der hochfrequenten Schwingungen des Kryokühlers.

Entsprechend dem Grundgedanken der Erfindung ist die Messzelle mit elastischen Kompensationskammern verbunden.Es wurde festgestellt, dass die auf das Gestell einwirkenden Kräfte trotz federnder Aufhängung des Kryokühlers und verschiedener Dämpfungsmaßnahmen nicht gleich Null sein können und das Gestell deshalb zu Schwingungen anregen.

Da die Messzelle zur Vermeidung einer Relativbewegung zwischen Probe und Strahlengang des Mikroskops zumindest für die Zeitdauer der Messung fest mit dem Mikroskoptisch verbunden ist, werden die durch das federnde dritte und vierte Kompensationskammer auf den mechanisch empfindlichen Mikroskoptisch eingeleitete Kräfte klein gehalten.

In einer vorteilhaften Ausgestaltung der Erfindung wird die Messzelle mit dem Positionierantrieb des Mikroskoptisches gekoppelt. Die Nachgiebigkeit der mit der Messzelle verbundenen Kompensationskammern erlaubt mit geringem Kraftaufwand eine Bewegung in mehreren Koordinaten. Besonders vorteilhaft ist, dass dadurch eine Positioniereinheit für die Probe innerhalb der Messzelle vermieden wird, die wegen der tiefen Temperaturen und der minimalen Baugröße nur mit hohen Kosten zu realisieren ist.

Ein weiterer Ausbreitungsweg von Schwingungen erfolgt über den Kälteleiterstab bis hin zur Probe. Da der Kaltkopf des Kryokühlers auch relativ zum Gehäuse des Kryokühlers schwingt, ist eine Entkopplung der Schwingungen beispielsweise durch eine Kaltleiterflexkupplung vorzunehmen, die dem Stand der Technik zu entnehmen ist.

Die Erfindung soll anhand von Ausführungsbeispielen beschrieben werden. Es zeigen:

Fig. 1 Verlauf der Anregungskräfte des Kryokühlers
Fig. 2 Gefederte Aufhängung eines Kryokühlers nach Stand der Technik
Fig. 3 Gefederte Aufhängung eines Kryokühlers mit seriell angeordneten Dämpfungselement
Fig. 4 Schematischer Längsschnitt entlang der Längsachse des Dämpfungssystems
Fig. 5 Verlauf der Gestellkraft ohne Spanneinheit
Fig. 6 Verlauf der Gestellkraft bei Vorspannung
Fig. 7 Kennlinie eines Elastomerabsorbers
Fig. 8 Schematischer Längsschnitt entlang der Längsachse des Dämpfungssystems
Fig. 9a Draufsicht auf Messzellenanordnung Messzelle
Fig. 9b Transversalverschiebung der Messzelle in eine erste Achse
Fig. 9c Transversalverschiebung der Messzelle in eine zweite Achse
Weitere Ausführungsbeispiele sind beschrieben in
Fig.10 Kopplung eines Kryokühlers mit einem Gestell nach Stand der Technik,
Fig.11 eine schematische Darstellung einer Reihen-/Parallelanordnung in einer Dämpfungseinheit nach Stand der Technik,
Fig. 12 Kopplung eines Kryokühlergehäuses mit einem Gestell über seriell angeordnete Feder- und Dämpfungselemente,
Fig. 13 eine schematische Darstellung einer Reihenanordnung eines Feder- und Dämpfungselementes in einer Dämpfungseinheit nach Stand der Technik,
Fig. 14 eine schematische Darstellung einer erfindungsgemäßen Dämpfungseinheit mit Reihenanordnung von Feder-/Dämpfungselementen mit Spanneinheit,
Fig. 15 eine schematische Darstellung einer erfindungsgemäßen Dämpfungseinheit mit Reihenanordnung von vier Kompensationskammern kombiniert mit Spanneinheit,
Fig. 16 Schnitt entlang der Längsachse einer erfindungsgemäßen Dämpfungsanordnung für die Mikroskopie mit Spanneinheit über vier Kompensationskammern,
Fig. 17 Schnitt entlang der Längsachse einer erfindungsgemäßen Dämpfungsanordnung für die Mikroskopie mit Spanneinheit über zwei Kompensationskammern,

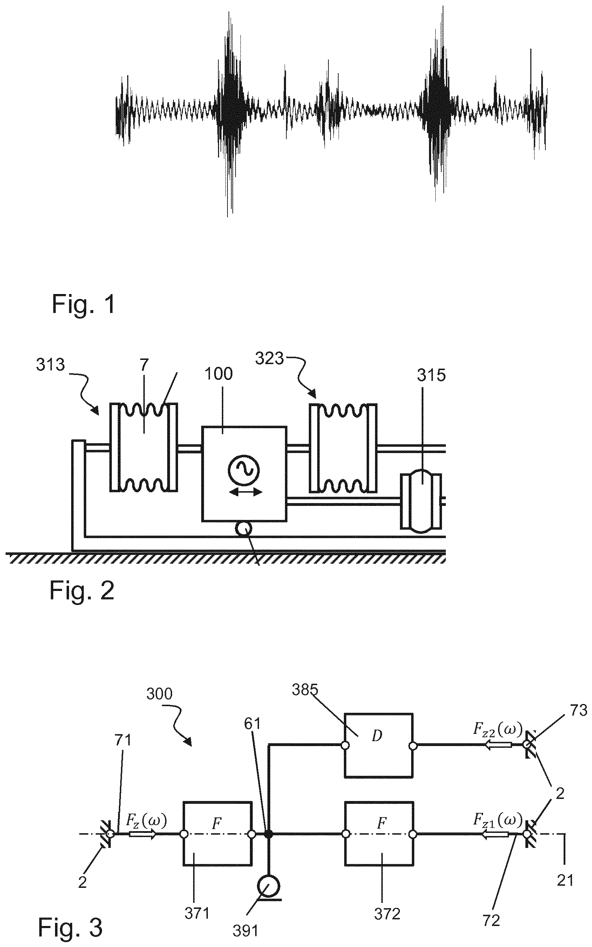

In Fig. 1 ist der zeitliche Verlauf der Anregungskräfte eines handelsüblichen Kryokühlers auf eine feste Aufspannung dargestellt. Erkennbar sind die Umkehrpunkte der Bewegung des Verdichterkolbens mit einem zeitlichen Abstand von ca. 250 ms, wobei besonders an den Umkehrpunkten Amplituden einer stark ausgeprägten Schwingung mit einer Frequenz von ca. 80 Hz zu verzeichnen sind. Zwischen den Maxima an den Umkehrpunkten sind die Schwingungen der Gassäule sichtbar. Vergleichbare Signalbilder finden sich auch in der Schrift US 2010/0050661.

Fig. 2 zeigt das Schema einer federnden Anbindung eines Kryokühlers 100 an einen Aufnahmerahmen 2, das sich in verschiedenen, aus dem Stand der Technik bekannten Ausgestaltungen wieder findet. Ein Dämpfungselement 5 ist zwischen dem Aufnahmerahmen 2 und dem Kryokühler 100 angeordnet und reduziert die Schwingungsamplitude des Kryokühlers 100.

Die federnde Anbindung des Kryokühlers 100 in Fig. 2 besteht aus einer Balgfeder 4, die einerseits am Aufnahmerahmen 2, andererseits am Kryokühler 100 befestigt ist. Es ist vorteilhaft, diese Balgfeder 4 zu evakuieren, um damit gleichzeitig die thermische Verbindung zwischen Kaltkopf des Kryokühlers 100 und einer Probe zu isolieren. Die Elastizität der Balgfeder 4 wird dabei vorteilhaft durch einen Membranbalg als zylindrische Umhüllung einer Kammer hergestellt. Membranbälge mit einer definierten Federsteifigkeit sind am Markt verfügbar. Das Feder- und das Dämpfungselement sind von ihrer Wirkung parallel angeordnet, da die jeweils beiden konstruktiven Interfaces mit einander starr verbunden sind.

Falls die Balgfeder 4 evakuiert wird, ist, wie aus dem Stand der Technik bekannt, eine zweite Balgfeder an den Kryokühler 100 anzukoppeln, die die luftdruckbedingte statische Kraft der ersten Balgfeder 4 aufhebt. Bezogen auf die schematische Darstellung in Fig. 2 bedeutet das eine Parallelanordnung von zwei Federn, die durch eine entsprechende Ersatzfeder zusammengefasst werden kann.

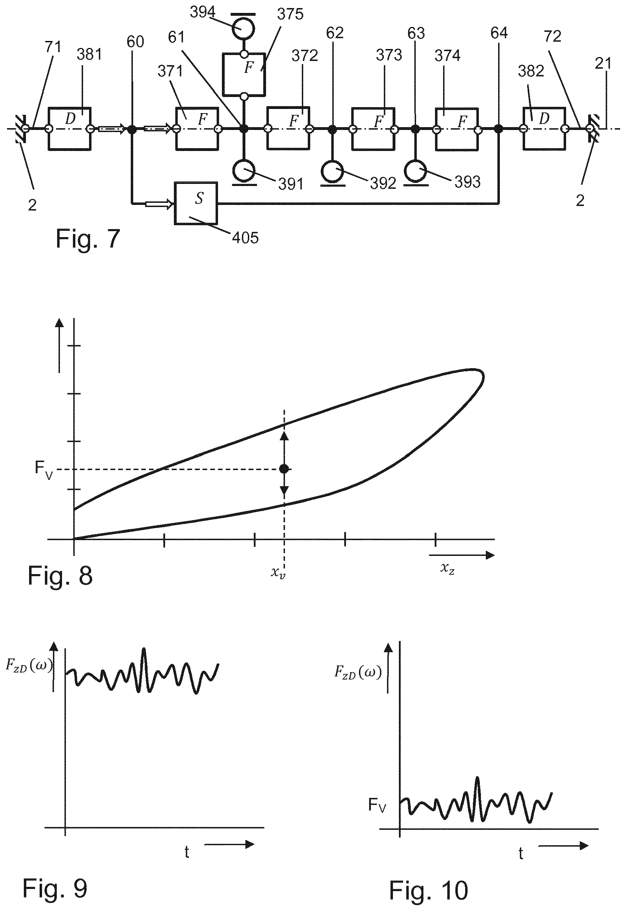

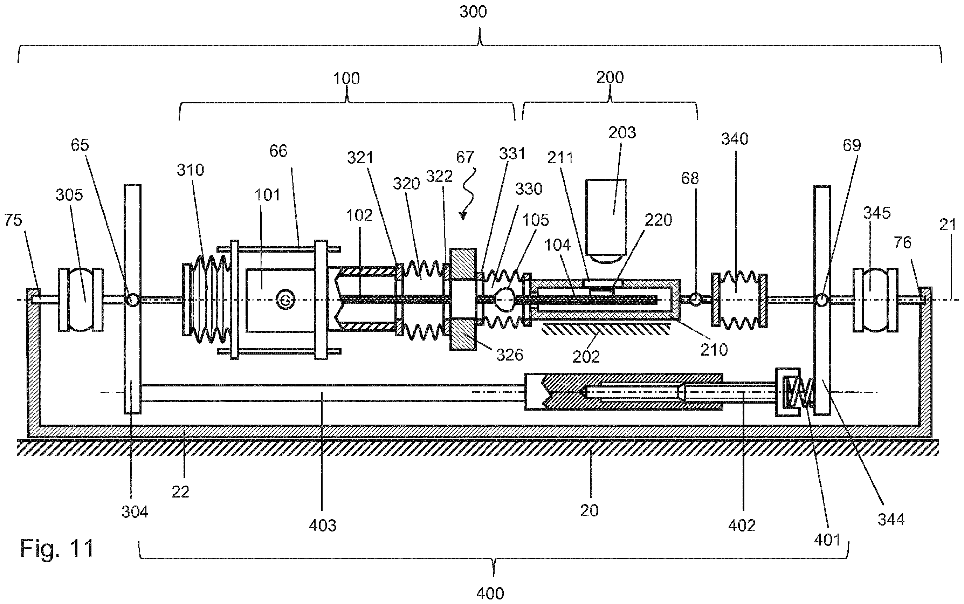

Die federnde Kopplung des Kryokühleinheit 100 mit dem Aufnahmegestell 2 in Fig. 10 erfolgt durch zwei Kompensationskammern 313 und 323, die einerseits am Aufnahmegestell 2, andererseits am Kryokühler 100 befestigt sind. Die Kompensationskammern 313 und 323 bestehen aus Balgfedern 4, die eine evakuierbare Kammer 7 umschließen und gleichzeitig eine in Fig. 10 nicht dargestellte thermische Verbindung zwischen einem Kaltkopf 102 des Kryokühlers 100 und einer Probe 220 (siehe Fig. 11, 12, 13, 14) isolieren. Der auf die evakuierten Kompensationskammern 313 und 323 wirkende Luftdruck erzeugt Kräfte, die sich bezogen auf den Kryokühler 100 gegeneinander aufheben und ein Kollabieren der Kompensationskammern 313 und 323 verhindern. In anderen Ausführungen nach dem Stand der Technik kann zum Verhindern des Kollabierens auch eine der beiden Kompensationskammern 313 und 323 durch eine Feder ersetzt werden, die in ihrer Bemessung den Luftdruck kompensiert. Die Abstützung des Kryokühlers 100 gegenüber der Schwerkraft wird schematisch durch eine reibungsfreie Lagerung 6 dargestellt.Das Modell nach Fig. 2 lässt erkennen, dass das Dämpfungssystem zur Unterdrückung der Gehäuseschwingung einem einfachen gedämpften Schwingkreis mit einer Resonanzfrequenz entspricht, wobei die Resonanzfrequenz durch die Masse des Kryokühlers 100 und die Balgfeder 4 bestimmt wird. Die Resonanzüberhöhung kann durch Dämpfung mit Hilfe des Dämpfungselementes 5 stark unterdrückt werden.

Die auf den Aufnahmerahmen 2 wirkenden Kräfte setzen sich aus der Krafteinwirkung der Balgfeder 4 und des Dämpfungselementes 5 zusammen. Deutlich wird, dass unterhalb der Eigenfrequenz das Verhältnis der Beträge der resultierenden Gestellkraft zur Anregungskraft des Kryokühlers ca. 1 ist, in der Nähe der Eigenresonanz je nach Dämpfung stark anwächst und erst oberhalb der Eigenresonanz je nach Dämpfung mehr oder weniger stark abfällt.

Insofern setzt die dämpfende Wirkung der Anordnung in etwa erst bei der doppelten Eigenfrequenz des durch die Masse des Kryokühlers 100 und der Balgfeder 4 gebildeten Schwingkreis ein, wobei allerdings die Dämpfung durch das Dämpfungselement 5 möglichst klein, beispielsweise $D_{AP}$ = 0,3 sein sollte. Weiterhin gibt sich daraus die Schlussfolgerung, dass der Kryokühler mit einer Eigenfrequenz sehr viel kleiner als 80 Hz mit einer relativ geringen Dämpfung federnd an den Aufnahmerahmen angebunden werden sollte.

Elastische Membranbälge mit Federkonstanten < 10N/mm kombiniert mit einer Masse des Kryokühlers von beispielsweise 15 bis 20 kg ergeben Eigenresonanzen von einigen Hertz. Damit lassen sich beispielsweise die auf den Aufnahmerahmen wirkenden Kräfte im Verhältnis zur Anregungskraft des Kryokühlersum ca. 20 dB bezogen auf den dominanten 80 Hz - Schwingungsanteil nach Fig. 1 verringern, wenn beispielsweise der Dämpfungsfaktor von D=0,3 eingestellt wurde.

Die Auslegung des Dämpfungssystems für die Aufhängung des Kryokühlers mit einer Eigenfrequenz, die weit unter der dominanten Anregungsfrequenz liegt, birgt jedoch einen Konflikt, da sich im Spektrum des Zeitsignals nach Fig. 1 auch Frequenzanteile finden lassen, die im Bereich von wenigen Hertz liegen. Sie werden durch die Umkehrfrequenz des Verdichterkolbens verursacht. Diese Frequenzanteile, die im Amplitudenspektrum des Zeitsignals zunächst wesentlich schwächer sind als die spektralen Anteile der dominanten Frequenz von ca. 80 Hz, werden durch eine schwach gedämpfte Aufhängung des Kryokühlers eher verstärkt.

Fig. 11 verdeutlicht in einer abstrahierten Darstellung von Feder- und Dämpfungselementen 371, 372, 385 mit einer angekoppelten Masse 391 eine mögliche Beispielstruktur für die Dämpfungseinheit 300. Die Federelemente 371 und 372, die den Kompensationskammern 313 und 325 entsprechen, sind zum Dämpfungselement 385 bezüglich ihrer Wirkung parallel angeordnet. Die Dämpfungseinheit 300 ist über die Gestellverbinder 71, 72 und 73 mit dem Aufnahmegestell 2 verbunden. Als Masse 391 in der Dämpfungseinheit 300 kann die Eigenmasse des Kryokühlers 100 und/oder ein anderes Gewicht wirken.

Das Modell nach Fig. 11 lässt erkennen, dass die Dämpfungseinheit 300 zur Unterdrückung der Gehäuseschwingung einem einfachen gedämpften Schwingkreis mit einer Resonanzfrequenz gleich zu setzen ist, wobei die Resonanzfrequenz durch die Masse 391 und der Federkonstanten der Federelemente 371 und 372 bestimmt wird. Eine Resonanzüberhöhung kann mit Hilfe des Dämpfungselementes 385 unterdrückt werden.

Die auf das Aufnahmegestell 2 wirkenden Kräfte setzen sich aus der Krafteinwirkung der quasi parallel angeordneten Federelemente 371 und 372 sowie dem Einfluss des Dämpfungselementes 385 zusammen. Es lässt sich zeigen, dass unterhalb der Eigenfrequenz das Verhältnis der Beträge der resultierenden Gestellkraft $F_z(\omega)$ zur Anre-gungskraft des Kryokühlers 100 ca. 1 ist, in der Nähe der Eigenresonanz je nach Dämpfung stark anwächst und erst oberhalb der Eigenresonanz je nach Dämpfung mehr oder weniger stark abfällt. Daraus entsteht ein Widerspruch bei der Dimensionierung der Dämpfungseinheit 300. Einerseits ist eine Resonanzüberhöhung zu vermeiden, andererseits sind Schwingungen der Gestellkraft $F_z(\omega)$ oberhalb der Resonanzfrequenz wirkungsvoll zu unterdrücken.

Handelsübliche, elastische Balgfedern 4 für die Kompensationskammern 313 und 323 mit Federkonstanten <2N/mm kombiniert mit einer Masse der Kryokühleinheit 100 von beispielsweise 15 bis 20 kg ergeben Eigenresonanzen von wenigen Hertz. Damit lassen sich beispielsweise die auf das Aufnahmegestell 2 wirkenden Kräfte oberhalb der Eigenresonanz wirksam reduzieren, wenn beispielsweise der Dämpfungsfaktor von D=0,3 eingestellt wurde.

Bessere Ergebnisse hinsichtlich der Dämpfungseigenschaften werden erreicht, wenn wie in Fig. 3 dargestellt, geschwindigkeitsabhängige Dämpfungselemente in Reihe zur elastischen Balgfeder 4 angeordnet werden. Die durch das Dämpfungselement 5 verursachten Gegenkräfte wirken dabei nicht direkt auf den Aufnahmerahmen 2 sondern nur indirekt über die elastische Balgfeder 4. Dabei wird vorausgesetzt, dass der zeitliche Mittelwert der durch den Kryokühler 100 verursachten Schwingung gleich Null ist, da sonst der Kryokühler 100 gegenüber dem Aufnahmerahmen 2 wandern würde. Die Abstützung des Kryokühlers 100 gegenüber der Schwerkraft wird schematisch durch eine reibungsfreieLagerung 6 dargestellt.

Im Vergleich zum Schema nach Fig. 2 wird ein wesentlich günstigerer Verlauf der Kräfte auf den Aufnahmerahmen 2 im Verhältnis zu den durch den Kryokühler verursachten Anregungskräfte beispielsweise für eine Dämpfung von D = 0,7 , die einem aperiodischen Grenzfall entspricht, erreicht. Diese Erkenntnis ist eine Grundlage für die Ausgestaltung des erfindungsgemäßen Dämpfungssystems.

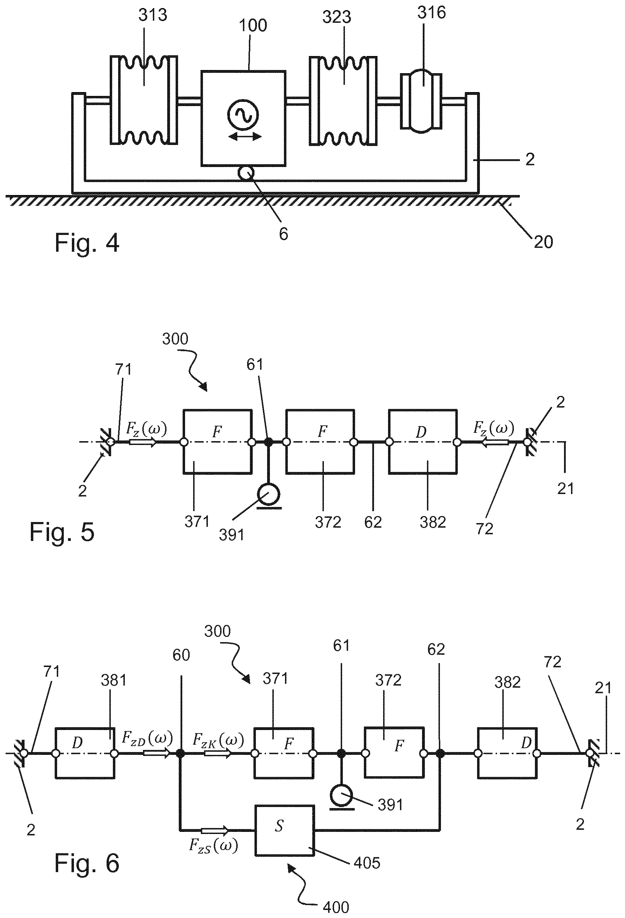

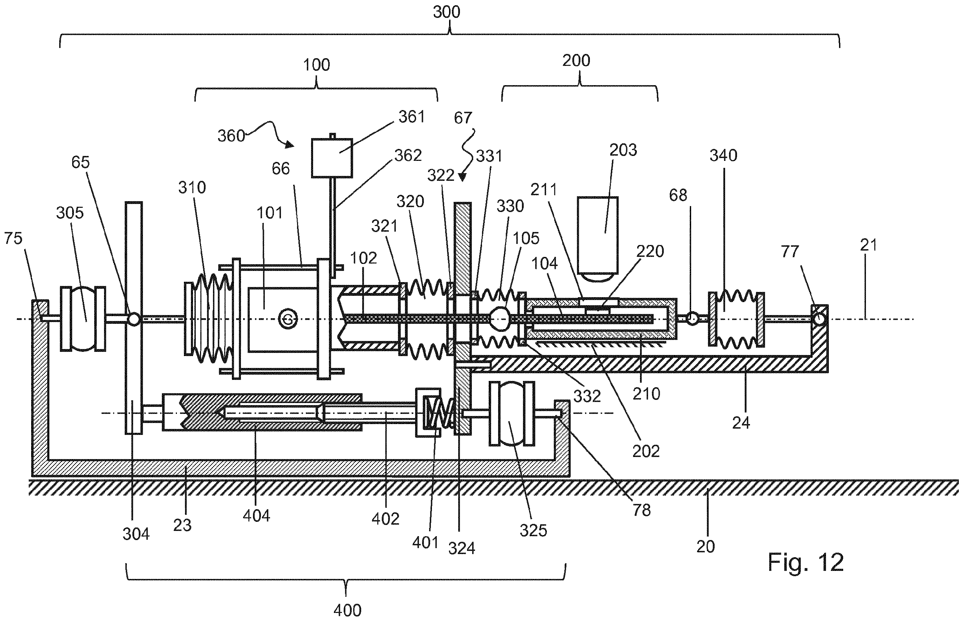

Bessere Ergebnisse hinsichtlich der Dämpfungseigenschaften werden erreicht, wenn wie in Fig. 12 dargestellt, ein Dämpfer 316 in Reihe zu den elastischen Kompensationskammern 313 und 323 angeordnet wird. Wie der schematischen Darstellung der Federelemente 371, 372 und eines Dämpfungselementes 382 in Fig. 5 zu entnehmen ist, wirken die durch das Dämpfungselement 382 verursachten Gegenkräfte $F_z(\omega)$ dabei nicht direkt auf das Aufnahmegestell 2, sondern nur indirekt über das Federelement 372. Dabei wird vorausgesetzt, dass der zeitliche Mittelwert der durch den Kryokühler 100 verursachten Schwingung gleich Null ist, da sich sonst der Kryokühler 100 gegenüber dem Aufnahmegestell 2 verschieben würde.

Im Vergleich zum Schema nach Fig. 11 wird ein wesentlich günstigerer Verlauf der Kräfte $F_z(\omega)$ auf das Aufnahmegestell 2 im Verhältnis zu den durch die Kryokühleinheit 100 verursachten Anregungskräften beispielsweise für eine Dämpfung von D = 0,7, was einem aperiodischen Grenzfall entspricht, erreicht. Diese Erkenntnis ist eine Grundlage für die Ausgestaltung des erfindungsgemäßen Dämpfungssystems.

Aus Fig. 2 ist ersichtlich, dass bei einer Evakuierung der durch die Balgfeder 4 gebildeten Kammer, um sie gleichzeitig als Isolation für den Kälteleiter zu nutzen, die entstehenden luftdruckbedingten Kräfte ein Zusammendrücken der Kammer bewirken würden. Daraus ergibt sich einerseits die Notwendigkeit, mit einer Reihenanordnung von Kompensationskammern den luftdruckbedingten Einfluss statischer Kräfte zu kompensieren und andererseits aber gleichzeitig die Einwirkung zu hoher statischer Kräfte auf den Dämpfer zu vermeiden.

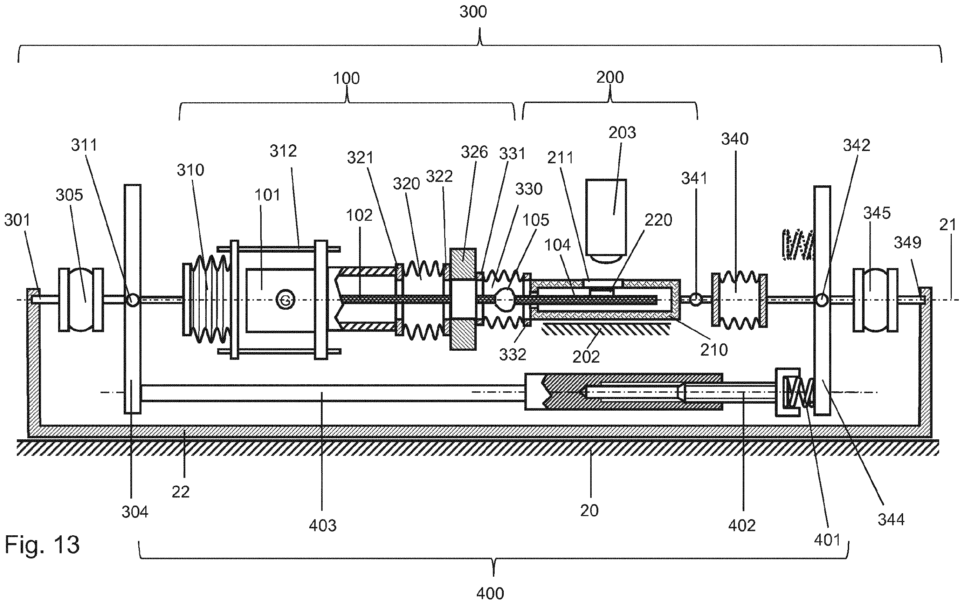

Aus Fig. 13 ist aber gleichzeitig auch ein Nachteil der Reihenanordnung des Federelementes 372 und des Dämpfungselementes 382 erkennbar. Wenn das Federelement 371 und/oder 372 als evakuierbare Kompensationskammer 313 oder/und 323 ausgeführt ist, entstehen entlang der Längsachse 21 hohe statische Kräfte. Für einen Durchmesser einer Kompensationskammer von beispielsweise 100 mm und unter der Annahme, dass sich der Durchmesser der Kompensationskammer im evakuierten Zustand nicht wesentlich verringert hat, beträgt die Längskraft $F_z(\omega)$ ca. 780 N. Diese Längskraft wirkt auf alle Elemente der Reihenanordnung 371, 372 und 382 also auch auf das in der Reihenanordnung befindliche Dämpfungselement 382.

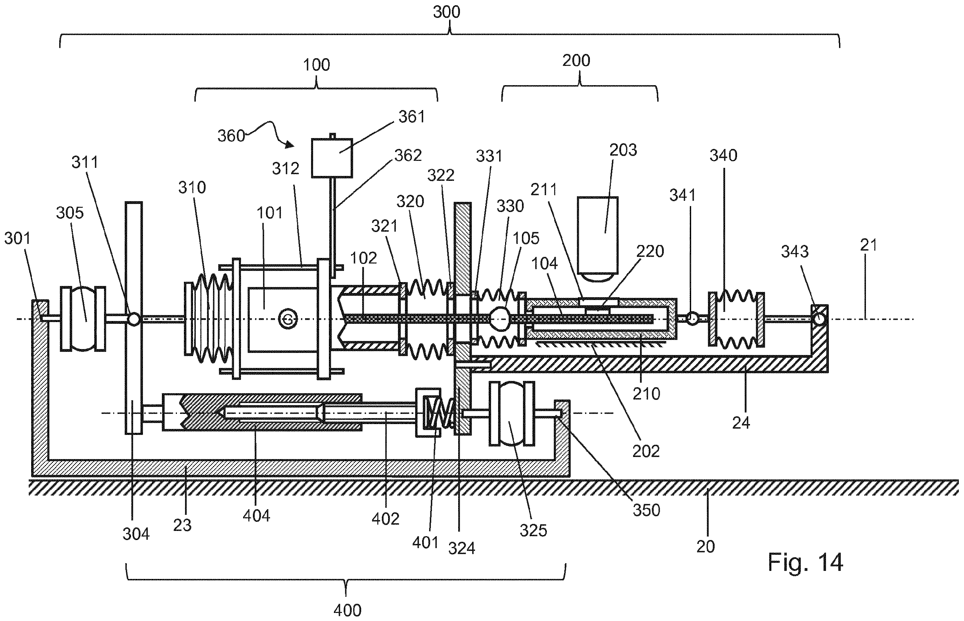

Fig. 14 verdeutlicht die Wirkung der erfindungsgemäßen Spanneinheit 400 mit dem Spannelement 405 auf eine Reihen/Parallelanordnung von Federelementen 371, 372 und Dämpfungselementen 381 und 382. Die Federelemente 371, 372 sind über den Koppelverbinder 61 miteinander und gleichzeitig mit der Masse 391 verbunden, die die Masse des Kryokühlers 100 nachbildet. Beide Federelemente 471, 472 sind mit Dämpfungselementen 381, 382 über die Koppelverbinder 60 bzw. 62 gekoppelt. Die jeweils andere Koppelstelle der Dämpfungselemente 381, 382 sind über die Gestellverbinder 71 und 72 am Aufnahmegestell 2 befestigt. Die Dämpfungseinheit 300 besteht in dem Ausführungsbeispiel nach Fig. 14 aus einer Masse 391 sowie aus zwei Reihenanordnungen von je einem Dämpfungselement 381 oder 382 und einem Federelement 471 und 472.

Auf die durch die Federelemente 371, 372, die Dämpfungselemente 381,382 und die Masse 391 gebildete Dämpfungseinheit 300 wirken auf die Koppelverbindern 60 und 62 die Spannkraft $F_{zS}$ bzw. die im Betrag gleiche, in Richtung jedoch entgegengesetzte Gegenkraft des Spannelementes 405. Bezogen auf den Koppelverbinder 60 gilt die Beziehung

$$F_{zD}(\omega) = F_{zK}(\omega) + F_{zS}$$

$F_{ZD}(\omega)$     auf die Dämpfungselemente 381,382 wirkende Kraft

$F_{zK}(\omega)$     auf die Federelemente 371 oder 372 wirkende Kraft

$F_{zS}$     Spannkraft des Spannelementes 405

Die über die Dämpfungselemente 381, 382 anliegende Kraft $F_{zS}(\omega)$ kann dabei durch Wahl der Spannkraft $F_{zS}$ so eingestellt werden, dass sich optimale Bedingungen für den Betrieb der Dämpfungselemente ergeben. Bedingung ist, dass das Spannelement 405 nicht direkt mit dem Aufnahmegestell 2 verbunden ist. Auf diese Weise wird sichergestellt, dass keine zusätzlichen Gestellkräfte mit Schwingungsanteil auf das Aufnahmegestell 2 geleitet werden.

Diese Vorteile werden mit den Fig.5, Fig.6 und Fig.7 verdeutlicht. In Fig.7 ist beispielsweise die Kennlinie eines Dämpfungselementes 381, 382 aus Elastomer dargestellt. Ein hoher Anteil der Verformungsenergie wird zwar absorbiert, es bleibt aber ein nicht unbeträchtlicher Teil, der als Federenergie gespeichert und auch wieder abgegeben wird. Durch Wahl der Spannkraft $F_{zS}$ kann nun der Arbeitspunkt des Dämpfungselementes 381 oder/und 382, gebildet aus den

Koordinatenwerten $F_v$ und $x_v$, in einen optimalen Bereich gelegt werden, in dem die Vibrationsenergie des Kryokühlers 100 maximal absorbiert, das heißt in Wärme umgewandelt wird.

Es ist dabei sehr vorteilhaft, die beispielsweise als Elastomerdämpfer ausgeführten Dämpfungselemente 381, 382 gering mit einer Vorspannung $F_v$ zu belasten, da die Wirkung des Dämpfungselementes 381, 382 im entspannten wie auch im völlig zusammen gepressten Zustand eher gering ist.

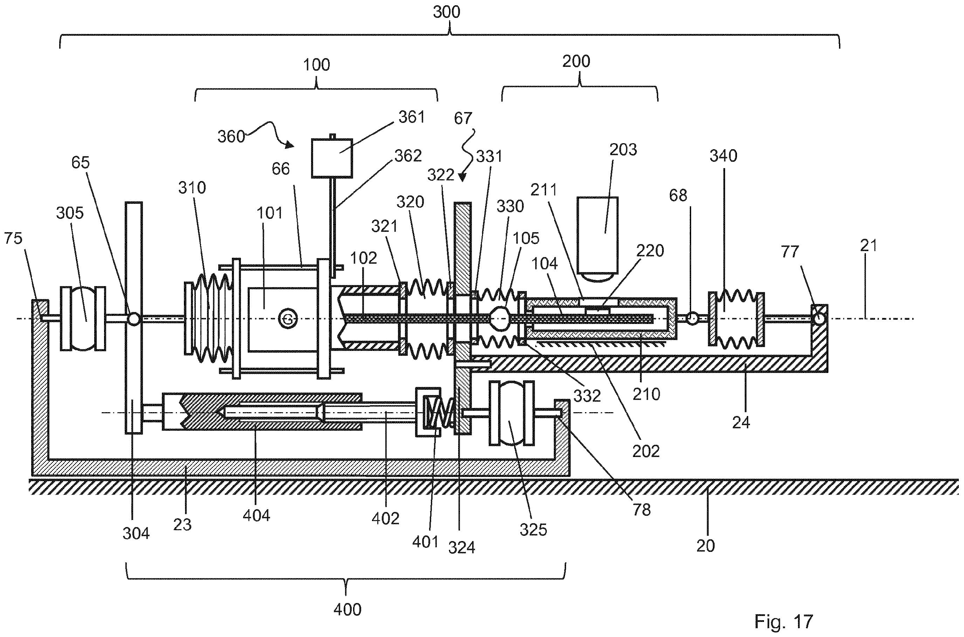

Eine solche Bedingung ergibt sich, wenn Abmessungen und Material der beispielhaft eingesetzten Dämpfer 305, 325, 345 (siehe Fig.19,20) aus Elastomer so bestimmt werden, dass die auf die Dämpfer 305, 325, 345 während des Betriebes des Kryokühleinheit 100 wirkenden dynamischen Kräfte $F_{zD}(\omega)$ eine Verformung $x_v$ zwischen minimal 0 bis 20% und maximal 80% - 100% ihrer zulässigen Verformung $x_z$ bewirken und dass durch die Spanneinheit 400 bei ausgeschalteter Kryokühleinheit 100 eine Verformung $x_v$ von 30 bis 70% der zulässigen Verformung $x_z$ eingestellt wird. In Fig.7 ist der Verlauf der über die Dämpfungselemente 381 und 382 anliegenden Kraft $F_{zD}(\omega)$ ohne, in Fig.17 mit Vorspannung $F_v$ dargestellt.

Besonders vorteilhaft ist es, die Dämpfungseinheit 300 bezogen auf den Koppelverbinder 61 symmetrisch auszubilden. In diesem Fall sind beide Verbindungen zum Aufnahmegestell 2 mit Federelementen 371, 372 und Dämpfungselementen 381, 382 mit jeweils gleichen Parametern bestückt.

Vorteilhaft ist es, das Spannelement 405 so auszubilden, dass die Spannkraft $F_{zS}$ aufgeprägt wird, das heißt, von der Position der Ankopplung an die Koppelverbinder 60, 62 zumindest im Rahmen der auftretenden Schwingungsamplituden an den beiden Koppelverbindern 60, 62 unabhängig ist.

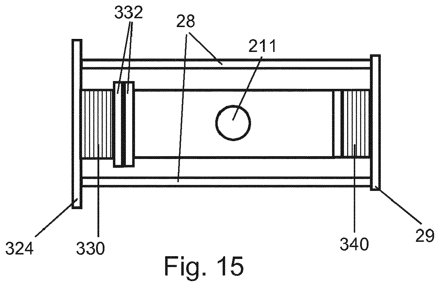

Fig.15 zeigt eine komplexere Struktur der Dämpfungseinheit 300 mit angekoppeltem Spannelement 405, bei der insgesamt vier Federelemente 371, 372, 373, 374 in Reihe angeordnet sind. Die Reihenanordnung ist beidseitig durch Dämpfungselemente 381, 382 abgeschlossen, die eine Verbindung zum Aufnahmegestell 2 über die Gestellverbinder 71, 72 herstellen. Die erfindungsgemäße Spanneinheit 400 mit dem Spannelement 405 wirkt dabei auf die Koppelverbinder 60 und 64, nicht aber direkt auf das Aufnahmegestell 2.

Der Koppelverbinder 61 ist wiederum mit der Masse 391 verbunden, die die Eigenmasse des Kryokühler 100 darstellt. Zusätzlich wird am Koppelverbinder 61 ein Schwingungstilger 360 in Form eines weiteren Federelementes 375 und einer Masse 394 angekoppelt. Weiterhin ist der Koppelverbinder 62 mit einer Ausgleichsmasse 392 zur Bildung eines weiteren Tiefpasses für die Unterdrückung von höher frequenten Schwingungen verbunden. Eine Masse 393 bildet die dynamischen Eigenschaften einer Messzelle 210 nach, in der sich eine Probe 220 befindet.

Vorteil dieser Reihenanordnung von vier Federelementen 371, 372, 373, 374 ist es, dass die schwingende Masse 391, die die Eigenmasse des Kryokühlers 100 mit verbundenen Konstruktionselementen repräsentiert, weitgehend von der Messzelle 210, nachgebildet durch Masse 393 der Messzelle 210, entkoppelt wird.

Fig. 4 zeigt die erfindungsgemäße Ausgestaltung einer Dämpfungseinheit 300 als Reihenanordnung von Feder- und Dämpfungselementen, wobei Kryokühlergehäuse 101 und Messzelle 210 eine Relativbewegung zueinander ausführen können, weil sich zwischen beiden Federelemente befinden, die als evakuierbare Kompensationskammern 320 und 330 ausgebildet sind.

In Fig. 4 sind Kryokühlergehäuse 101 mit zwei als Kompensationskammern 310 und 320 ausgeführte Federelemente über die Koppelstelle 312, die Messzelle 210 ebenfalls mit zwei als Kompensationskammer 330 und 340 ausgeführte Federelemente über die Koppelstelle 332 und 341 verbunden. Damit ergibt sich eine Reihenanordnung von insgesamt vier Kompensationskammern 310, 320, 330, 340, die an ihren beiden äußeren Koppelstellen 311 und 342 mit jeweils einen Dämpfer 305 und 345 verbunden sind. Der Dämpfer 305 ist über seine Einspannstelle 301, der Dämpfer 345 über seine Einspannstelle 349 mit dem Gestell 22 verbunden.

Beide Dämpfer 305, 345 wirken diametral entlang einer Längsachse 21 der Dämpfungseinheit 300. Durch diese serielle Anordnung werden die auf ein Gestell 22 wirkenden Kräfte minimiert und eine hohe schwingungstechnische Entkopplung von Kryokühlergehäuse 101 und Messzelle 210 erreicht. Das Gestell 22 steht auf einem Instrumententisch 20.

Aus Fig. 4 wird ersichtlich, dass bei Evakuierung der Kompensationskammern 310, 320, 330 und 340 in Richtung der Längsachse 21 der Reihenanordnung hohe Kräfte entstehen, die die Dämpfer 305 und 345 mit Zugkräften belasten, die in der Größenordnung von 1000 N liegen können. Dämpfer, die für diesen Anwendungsfall geeignet sind, müssten in der Lage sein, diese Zugkräfte aufzunehmen, ohne dass die Dämpfungseigenschaften verschlechtert werden. In der Praxis werden diese Dämpfer zusätzlich federnde Eigenschaften besitzen müssen, um diese Zugkräfte aufzunehmen. Das bedeutet, dass parallel zu dem eigentlichen Dämpfer eine Feder anzuordnen ist. Damit würden die dynamisch wirkenden Gestellkräfte wiederum erhöht.

Fig. 5 verdeutlicht den Verlauf der Zugkräfte in der Reihenanordnung. Die durch Vibration des Kryokühlers 100 erzeugten Kräfte in der Größenordnung von 100 N überlagern sich den statischen Kräften der evakuierten Kompensationskammern 310, 320, 330, 340 in der Größenordnung von 1000 N.

Deshalb werden mit Hilfe einer erfindungsgemäßen Spanneinheit 400 auf eine mit den Koppelstellen 311 verbundenen Verbindungsplatte 304 und auf eine mit der Koppelstelle 342 verbundenen Verbindungsplatte 344 bezogen auf die Längsachse 21 diametral wirkende Kräfte eingeleitet. Auf diese Weise können die statischen Kräfte, die auf die Dämpfer 305 und 345 in der Reihenanordnung wirken, verringert, in Richtung Längsachse 21 umgekehrt oder sogar vollständig kompensiert werden, wie aus Fig. 6 zu ersehen ist.

Im Ausführungsbeispiel nach Fig. 4 enthält diese Spanneinheit 400 eine Vorspannfeder 401 in Form einer Druckfeder. Die Höhe der Zugkräfte in der Reihenanordnung kann durch Verdrehen einer Spannschraube 402 gegenüber einem Druckbolzen 403 beeinflusst werden und auf eine für die Dämpfer 305 und 345 optimale Höhe eingestellt werden. Die Vorspannfeder 401 sichert dabei eine annähernde Konstanz der Vorspannkraft während des Betriebes der Kryokühleinheit 100. Die Anordnung der Spanneinheit 400 beeinflusst dabei nicht die federnde Wirkung der Anbindung von Kryokühlergehäuse 101 und Messzelle 210 in der Reihenanordnung.

In Fig. 7 ist beispielsweise die Kennlinie eines Dämpfers aus Elastomer dargestellt. Ein hoher Anteil der Verformungsenergie wird zwar absorbiert, es bleibt aber ein nicht unbeträchtlicher Teil, der als Federenergie gespeichert und wieder abgegeben wird. Durch Wahl der Federsteifigkeit der Vorspannfeder 401 und durch Verdrehen der Spannschraube 402 gegen den Druckbolzen 403 kann nun der Arbeitspunkt der Dämpfer in einen optimalen Bereich gelegt werden, bei die Vibrationsenergie des Kryokühleinheit 100 maximal absorbiert, das heißt in Wärme umgewandelt wird.

Es ist dabei sehr vorteilhaft, die beispielsweise als Elastomerdämpfer ausgeführten Dämpfer 305 und 345 gering mit einer Druckspannung vorzuspannen, da die Wirkung des Dämpfers im entspannten und im völlig zusammen gepressten Zustand eher gering ist.

Eine solche Bedingung ergibt sich, wenn Abmessungen und Material der Elastomerdämpfer so bestimmt werden, dass die auf die Elastomerdämpfer während des Betriebes des Kryokühlers wirkenden dynamischen Kräfte $F_D$ eine Verformung zwischen minimal 0 bis 20% und maximal 80% - 100% ihrer zulässige Hübe $x_z$ bewirken und dass durch die Vorspanneinrichtung bei ausgeschalteten Kryokühler eine Verformung $x_v$ von 30 bis 70% des zulässigen Hubs eingestellt wird.

In der Darstellung in Fig. 4 wurde zur besseren Übersicht darauf verzichtet, mehrere, symmetrisch um die Längsachse 21 herum angeordnete Spanneinheiten 400 darzustellen. Es versteht sich, dass ein Kippmoment vermieden werden muss. Auch die Dämpfer 305 und 345 können aus jeweils mehreren einzelnen Dämpfern bestehen, die symmetrisch um die Längsachse 21 herum angeordnet sind. Ebenfalls wurde darauf verzichtet, Führungselemente darzustellen, die lediglich eine Bewegung der Kryokühleinheit 100, der Verbindungsplatten 304 und 344 in Richtung der Längsachse 21 zulassen.

Die in Fig. 4 dargestellte Reihenanordnung wurde mit einer weiteren Dämpfungsmaßnahme kombiniert, die in einem Tiefpass besteht, der aus einer Ausgleichsmasse 326 in Verbindung mit den Kompensationskammern 310, 320, 330, 340 gebildet wird. Die Ausgleichsmasse ist dabei mit den Koppelstelle 322 und 331 verbunden.

Die Probe 220 befindet sich im Strahlengang eines konfokalen Lasermikroskops und wird durch das Mikroskopobjektiv 203 mit Hilfe eines Lasers zur Fluoreszenz angeregt. Zugleich kann die Probe 220 durch ein Fenster 211 in der Messzelle 210 optisch betrachtet werden. Die Messzelle 210 ist während der Beobachtung der Probe 220 durch eine Klemmeinrichtung fest mit dem Mikroskoptisch 202 verbunden.

Zur Abkühlung der Probe 220 beispielsweise auf Temperaturen um 10 K ist sie auf einem Kälteleiterstab 104 mit einer engen thermischen Kopplung befestigt. Probe 220 und der Kälteleiterstab 104 müssen thermisch gegenüber der Umgebung abgeschirmt werden, was zweckmäßig durch Evakuierung des Innenvolumens der Messzelle 210 erfolgt.

Zwischen der Probe 220 innerhalb der Messzelle 210 und dem Kaltkopf 102 des Kryokühlers ist eine thermische Kopplung vorgesehen, über die ebenfalls Schwingungen übertragen werden können. Die nach dem Stand der Technik verwendete flexible Litzenverbindung als eine Kaltleiterflexkupplung 105 lässt sich offensichtlich so weich gestalten, dass eine Schwingungsübertragung von Kaltkopf 102 auf die Probe 220 unterbunden werden kann. Diese Kaltleiterflexkupplung 105 besteht beispielsweise aus einer Vielzahl dünner Drähte beispielsweise aus OFD-Kupfer. Der Einfluss des Zweiges kann deshalb vernachlässigt werden.

Der Kälteleiterstab 104 wird in der Messzelle 210 vorteilhaft nur punktweise gelagert. Das Lagermaterial besteht zudem vorteilhafterweise aus einem thermisch schlecht leitenden Material beispielsweise Peek oder Teflon.

Der Kälteleiterstab 104, der Kaltkopf 102, die Kaltleiterflexkupplung 105 und die Messzelle 210 bilden einen geschlossenen evakuierbaren Raum, da die Koppelstellen 321, 322 331 und 332 sowie die Ausgleichsmasse 326 um die Längsachse 21 herum geöffnet sind, in, bezogen auf die Längsachse 21, radiale Richtung eine vakuumdichte Verbindung enthalten.

Ein weiteres Ausführungsbeispiel der Erfindung ist in Fig. 8 dargestellt. Das eine Ende der Reihenanordnung von vier Kompensationskammern 310, 320, 330, 340 wird über den Dämpfer 305 mit dem Gestell 23 gekoppelt. Ein weiterer diametral wirkender Dämpfer 325 verbindet über die Verbindungsplatte 324 die Koppelstellen 322 und 331 der Kompensationskammer 320, 330 mit dem Gestell 23. In diesem Fall überbrückt die erfindungsgemäße Spanneinheit 400 nur zwei Kompensationskammern 310 und 320 wirkt aber ebenfalls auf die zwei diametral gegenüber liegende Dämpfer 305 und 325. Die Dämpfer 305 und 325 wirken dabei sowohl auf das Kryokühlergehäuse 101 als auch auf die Messzelle 210.

Die Koppelstelle 331 und die Einspannstelle 343 werden durch einen Hilfsrahmen 24 überbrückt, der die freie Beweglichkeit der Messzelle 210 gegenüber der Verbindungsplatte 324 in keiner Weise beeinflusst.

**EP 2 903 709 B1**

Gemäß Fig. 8 ist die Verbindungsplatte 324 zwischen den Koppelstelle 322 und 331 angeordnet. Die Verbindungsplatte 324 enthält ebenfalls um die Längsachse 21 herum einen Durchbruch für die Durchführung des Kaltkopfes 102 in einem evakuierbaren Raum.

Die Dämpfungseinheit 300 nach Fig.8 lässt sich ebenfalls mit weiteren Dämpfungsmaßnahmen kombinieren. Ausgehend von der Überlegung, Dämpfungselemente zu vermeiden, deren Gegenkräfte direkt auf das Gestell 23 einwirken, ist in einer weiteren vorteilhaften Ausgestaltung der Erfindung vorgesehen, das Kryokühlergehäuse 101 zusätzlich mit einem Schwingungstilger 360 zu koppeln, dessen Eigenfrequenz entweder in der Nähe der Resonanzfrequenz der elastischen Aufhängung der Kryokühleinheit 100 oder in der Nähe der Umkehrfrequenz der Kolbenbewegung liegt. Da der beispielhaft als Kombination einer Tilgerfeder 362 und Tilgermasse 361 ausgeführte Schwingungstilger 360 einseitig am Kryokühlergehäuse 101 befestigt ist, wirken die Kräfte nur über die Einspannstellen 301 und350, nicht aber direkt auf das Gestell 23.

Die Tilgerfeder 362 ist so ausgelegt, dass dieTilgermasse 361 des Schwingungstilgers 360 den Bewegungen der Kryokühleinheit 100 mit einer gewissen Verzögerung folgt. Der damit einher gehende Energieverbrauch wird der Schwingung entzogen und wirkt damit dämpfend.

Die positive Wirkung des Schwingungstilgers 360 ist dabei nicht nur in der Nähe der Eigenfrequenz der Aufhängung der Kryokühleinheit 100 festzustellen. Auch im Bereich der dominanten Anregungsfrequenz von 80 Hz können Effekte zur Minimierung der auf das Gestell 23 wirkenden Kräfte beobachtet werden. Ab etwa der 10-fachen Eigenfrequenz der Aufhängung sind beispielsweise die auf das Gestell 23 bzw. den Instrumententisch 20 wirkenden Kräfteschwingungen gegenüber der Anregung um ca. 40 dB abgeschwächt.

Eine weiterer Vorteil der erfindungsgemäßen Reihenanordnung von vier Kompensationskammern 310, 320, 330,340 in Verbindung mit der Spanneinheit 400 besteht darin, dass die Messzelle 210 nicht direkt mit dem Gestell 22 oder 23, sondern über federnde Kompensationskammern 330 und 340 verbunden ist. Damit werden verbleibende Schwingungen des Gestells 22 oder 23 wirksam unterdrückt, da diese Gestelle 22 oder 23 nicht beliebig steif und schwer ausgeführt werden können.

In weiteren Ausführungen der Erfindung werden die einzeln vorgeschlagenen Dämpfungsmaßnahmen miteinander kombiniert.

Eine weitere vorteilhafte Ausführung der erfindungsgemäßen Reihenanordnung von vier Kompensationskammern 310, 320, 330,340 in Verbindung mit Spanneinheit 400 besteht darin, dass die Messzelle 210 zumindest für die Zeitdauer der Beobachtung einer Probe 220 direkt mit dem Mikroskoptisch 202 verbunden ist. Wenn die Klemmverbindung zwischen Messzelle 210 und dem Mikroskoptisch 202 gelöst wird, kann die komplette Dämpfungseinheit 300 aus dem Strahlengang des Mikroskopobjektivs 203 zurückgezogen oder herausgeschwenkt werden. Die Messzelle 210 ist dann beispielsweise für das Auswechseln der Probe 220 frei zugänglich.

Die Messzelle 210 wird beidseitig durch die Kompensationskammern 330, über eine Koppelstelle 332, und 340 gehalten. Die auf die Kompensationskammern 330 und 340 wirkenden Kräfte kompensieren sich in Richtung der Längsachse 21 der Dämpfungseinheit 300, da die jeweils anderen Enden der Kompensationskammern mit einer Abschlussplatte 29 und Verbindungsplatte 324 verbunden sind (Fig.9a bis Fig.9c). Die Abschlussplatte 29 ist über Stützstäbe 28 mit der Verbindungsplatte 324 verbunden. Die Messzelle 210 ist damit trotz der Evakuierung der Kompensationskammern 330 und 340 in Richtung der Längsachse 21 relativ leicht verschiebbar.

Die für die Verschiebung der Messzelle 210 in Richtung der Längsachse 21 des Dämpfungssystems notwendige Kraft resultiert dabei aus den Federkonstanten der Kompensationskammern 330 und 340 und ihrer Parallelschaltung. Diese Federkonstanten können hinreichend klein dimensioniert werden, wenn die Bälge der Kompensationskammern 330 und 340 aus vielen Einzellagen gebildet werden.

Beispielsweise werden die Kompensationskammern 330 und 340 mit einer Federkonstante von 4 N/mm ausgeführt. Bei Klemmung der Messzelle 210 am Mikroskoptisch 202 wirken demzufolge relativ kleine statische Kräfte in der Größenordnung von wenigen Newton auf den Mikroskoptisch 202, die durch den Koordinatenantrieb des Mikroskoptisches 202 leicht überwunden werden können, wie in Fig. 9a bis 9c verdeutlicht wird. Eine Relativbewegung ist auch seitlich oder in Richtung der optischen Achse des Mikroskopobjektivs 203 unter s-förmiger Verformung der Kompensationskammern 330 und 340 möglich.

Dynamische Kräfte werden dagegen durch die Nachgiebigkeit der Kompensationskammern 330 und 340 weitgehend vermieden.

Fig.19 zeigt die erfindungsgemäße Ausgestaltung der Dämpfungseinheit 300 als Reihenanordnung von federnden Kompensationskammern 310, 320, 330, 340 und Dämpfern 305, 345 in Kombination mit einer Spanneinheit 400, die aus der schematischen Struktur des Dämpfungssystems 300 nach Fig. 7 abgeleitet ist.

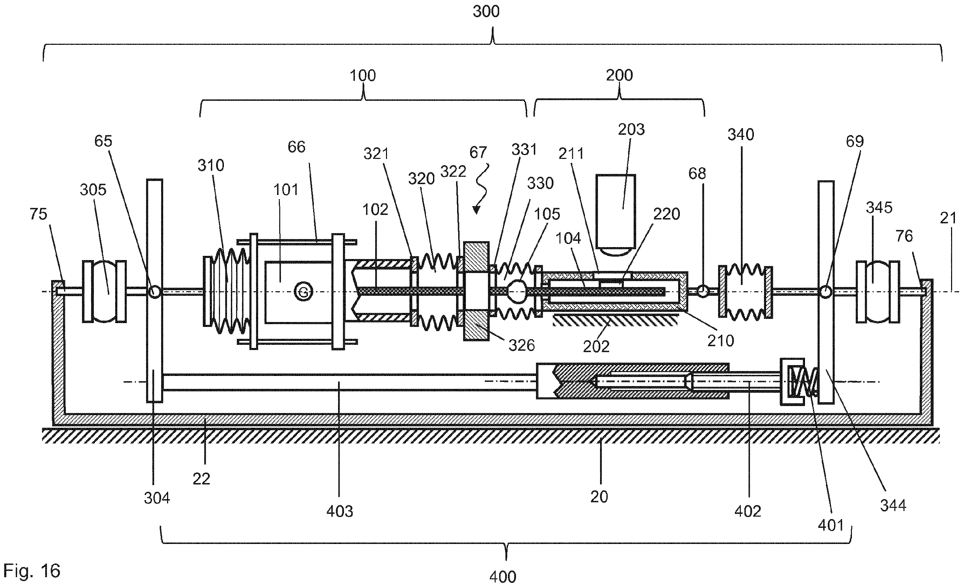

In Fig.16 ist das Kryokühlergehäuse 101 mit den zwei federnden Kompensationskammern 310 und 320 über den Koppelverbinder 66 verbunden. Die Messzelle 210 ist am Koppelverbinder 68 der beiden Kompensationskammer 330 und 340 befestigt. Damit ergibt sich eine Reihenanordnung von insgesamt vier Kompensationskammern 310, 320, 330, 340, die an ihren beiden äußeren Koppelverbindern 311 und 342 mit jeweils einen Dämpfer 305 und 345 abgeschlossen wird. Der Dämpfer 305 ist über den Gestellverbinder 75, der Dämpfer 345 über den Gestellverbinder 76 am Gestell 22 befestigt.

Die beiden Dämpfer 305 und 345 wirken diametral entlang einer Längsachse 21 der Dämpfungseinheit 300. Durch diese serielle Anordnung werden die auf ein Gestell 22 wirkenden Kräfte minimiert und eine hohe schwingungstechnische Entkopplung von Kryokühlergehäuse 101 und Messzelle 210 erreicht. Das Gestell 22 steht auf der Instrumentenplattform 20.

Aus Fig.16 wird ersichtlich, dass bei Evakuierung der Kompensationskammern 310, 320, 330 und 340 in Richtung der Längsachse 21 der Reihenanordnung hohe Kräfte entstehen, die die Dämpfer 305 und 345 mit Kräften belasten und in der Größenordnung von 1000 N liegen können. Dämpfer, die für diesen Anwendungsfall geeignet sind, müssten in der Lage sein, diese Kräfte aufzunehmen, ohne dass die Dämpfungseigenschaften verschlechtert werden. In der Praxis werden diese Dämpfer zusätzlich federnde Eigenschaften besitzen müssen, um diese Kräfte aufzunehmen. In ihrer Wirkung entsprechen sie in der Realität einer Parallelanordnung eines Dämpfungselementes und einem Federelement. Die dynamisch wirkenden Gestellkräfte $F_z(\omega)$ werden wiederum erhöht.

Fig.7 verdeutlicht den Verlauf der Gestellkräfte $F_z(\omega)$ in der Reihenanordnung. Die durch Vibration des Kryokühlers 100 erzeugten Kräfte in der Größenordnung von 100 N überlagern die statischen Kräfte der evakuierten Kompensationskammern 310, 320, 330, 340 in der Größenordnung von 1000 N.

Deshalb werden mit Hilfe der erfindungsgemäßen Spanneinheit 400 auf eine am Koppelverbinder 65 befestigte Verbindungsplatte 304 und auf eine am Koppelverbinder 69 befestigte Verbindungsplatte 344 bezogen auf die Längsachse 21 diametral wirkende Kräfte eingeleitet. Auf diese Weise können die statischen Kräfte, die auf die Dämpfer 305 und 345 in der Reihenanordnung wirken, verringert, in Richtung Längsachse 21 umgekehrt oder sogar vollständig kompensiert werden.

Im Ausführungsbeispiel nach Fig.16 enthält diese Spanneinheit 400 eine Vorspannfeder 401 in Form einer Druckfeder. Die Höhe der auf die Dämpfer 305 und 345 wirkenden Kräfte in der Reihenanordnung kann durch Verdrehen einer Spannschraube 402 gegenüber einem Druckbolzen 403 beeinflusst werden und auf eine für die Dämpfer 305 und 345 optimale Höhe eingestellt werden. Die Vorspannfeder 401 sichert dabei eine annähernde Konstanz der Spannkraft $F_{zS}$ unabhängig von den Vibrationen an den Koppelverbindern 311 und 342. Die Anordnung der Spanneinheit 400 beeinflusst dabei nicht die federnde Wirkung der Anbindung von Kryokühlergehäuse 101 und Messzelle 210 in der Reihenanordnung.

In der Darstellung in Fig.16 wurde zur besseren Übersicht darauf verzichtet, mehrere, symmetrisch um die Längsachse 21 radial angeordnete Spanneinheiten 400 darzustellen. Es versteht sich, dass ein Kippmoment vermieden werden muss. Auch die Dämpfer 305 und 345 können aus Gruppen von einzelnen Dämpfern bestehen, die symmetrisch um die Längsachse 21 herum angeordnet sind. Ebenfalls wurde darauf verzichtet, Führungselemente darzustellen, die lediglich eine Bewegung der Kryokühleinheit 100, der Verbindungsplatten 304 und 344 in Richtung der Längsachse 21 zulassen.

Die in Fig.16 dargestellte Reihenanordnung wurde mit einer weiteren Dämpfungsmaßnahme kombiniert, die in einem Tiefpass zur Unterdrückung höher frequenter Schwingungen besteht, der aus einer Ausgleichsmasse 326 in Verbindung mit den Kompensationskammern 310, 320, 330, 340 gebildet wird. Die Ausgleichsmasse 326 ist dabei am Koppelverbinder 67 befestigt, der die beiden Koppelstellen 322 und 331 verbindet.

Die Probe 220 befindet sich im Strahlengang eines konfokalen Lasermikroskops und wird durch das Mikroskopobjektiv 203 mit Hilfe eines Lasers zur Fluoreszenz angeregt. Zugleich kann die Probe 220 durch ein Messzellenfenster 211 in der Messzelle 210 optisch betrachtet werden. Die Messzelle 210 ist während der Beobachtung der Probe 220 durch eine Klemmeinrichtung, die hier nicht dargestellt ist, fest mit dem Mikroskoptisch 202 verbunden.

Zur Abkühlung der Probe 220 beispielsweise auf Temperaturen um 10 K ist sie auf einem Kälteleiterstab 104 mit einer engen thermischen Kopplung befestigt. Probe 220 und der Kälteleiterstab 104 müssen thermisch gegenüber der Umgebung abgeschirmt werden, was zweckmäßig durch Evakuierung des Innenraums der Messzelle 210 erfolgt.

Zwischen der Probe 220 innerhalb der Messzelle 210 und dem Kaltkopf 102 des Kryokühlers ist eine thermische Kopplung vorgesehen, über die ebenfalls Schwingungen übertragen werden können. Die nach dem Stand der Technik verwendete flexible Litzenverbindung als eine Kaltleiterflexkupplung 105 lässt sich dabei so weich gestalten, dass eine Schwingungsübertragung von Kaltkopf 102 auf die Probe 220 unterbunden werden kann. Diese Kaltleiterflexkupplung 105 besteht beispielsweise aus einer Vielzahl dünner Drähte beispielsweise aus OFD-Kupfer.

Der Kälteleiterstab 104 wird in der Messzelle 210 vorteilhaft nur punktweise gelagert. Das Lagermaterial besteht zudem aus einem thermisch schlecht leitenden Material beispielsweise PEEK oder Teflon.

Der Kälteleiterstab 104, der Kaltkopf 102, die Kaltleiterflexkupplung 105 befinden sich in einem gemeinsam evakuierbaren Raum, gebildet aus den Kompensationskammern 320, 330 und dem Messzelle 220.

Ein weiteres Ausführungsbeispiel der Erfindung ist in Fig.17 dargestellt. Das eine Ende der Reihenanordnung von vier Kompensationskammern 310, 320, 330, 340 wird über den Dämpfer 305 und dem Gestellverbinder 75 mit dem Gestell 23 gekoppelt. Ein weiterer diametral zum Dämpfer 305 wirkender Dämpfer 325 ist zwischen dem Koppelverbinder 67 der Kompensationskammern 320, 330 und dem Gestellverbinder 78 angeordnet. In diesem Fall überbrückt die erfindungsgemäße Spanneinheit 400 nur zwei Kompensationskammern 310 und 320, wirkt aber ebenfalls entlastend auf die zwei diametral gegenüber liegende Dämpfer 305 und 325. Die Dämpfer 305 und 325 wirken dabei sowohl auf das Kryokühlergehäuse 101 als auch auf die Messzelle 210. Der Koppelverbinder 67 und der Gestellverbinder 77 werden durch einen Hilfsrahmen 24 überbrückt, der die freie Beweglichkeit der Messzelle 210 gegenüber der Verbindungsplatte 324 ermöglicht.

Gemäß Fig.17 ist die Verbindungsplatte 324 zwischen den Koppelstellen 322 und 331 angeordnet. Die Verbindungsplatte 324 enthält ebenfalls um die Längsachse 21 herum einen Durchbruch für die Durchführung des Kaltkopfes 102 innerhalb eines evakuierbaren Raums. Die Dämpfungseinheit 300 nach Fig.17 lässt sich ebenfalls mit weiteren Dämpfungsmaßnahmen kombinieren. Ausgehend von der Überlegung, Dämpfungselemente zu vermeiden, deren Gegenkräfte direkt auf das Gestell 23 einwirken, ist in einer weiteren vorteilhaften Ausgestaltung der Erfindung vorgesehen, das Kryokühlergehäuse 101 zusätzlich mit einem Schwingungstilger 360 zu koppeln, dessen Eigenfrequenz entweder in der Nähe der Resonanzfrequenz der elastischen Aufhängung der Kryokühleinheit 100 oder in der Nähe der Umkehrfrequenz der Kolbenbewegung liegt. Da der beispielhaft als Kombination einer Tilgerfeder 362 und Tilgermasse 361 ausgeführte Schwingungstilger 360 einseitig am Kryokühlergehäuse 101 befestigt ist, besteht keine direkte Wirkung auf das Gestell 23.

Die Tilgerfeder 362 ist so ausgelegt, dass die Tilgermasse 361 des Schwingungstilgers 360 den Bewegungen der Kryokühleinheit 100 mit einer gewissen Verzögerung folgt. Der damit einher gehende Energieverbrauch wird der Schwingung entzogen und wirkt damit dämpfend.

Die positive Wirkung des Schwingungstilgers 360 ist dabei nicht nur in der Nähe der Eigenfrequenz der Aufhängung der Kryokühleinheit 100 festzustellen. Auch im Bereich der dominanten Anregungsfrequenz von 80 Hz können Effekte zur Minimierung der auf das Gestell 23 wirkenden Kräfte beobachtet werden. Ab etwa der 10-fachen Eigenfrequenz der Aufhängung sind beispielsweise die auf das Gestell 23 bzw. die Instrumentenplattform 20 wirkenden Kräfteschwingungen gegenüber der Anregung um ca. 40 dB abgeschwächt.

Eine weiterer Vorteil der erfindungsgemäßen Reihenanordnung von vier Kompensationskammern 310, 320, 330, 340 in Verbindung mit der Spanneinheit 400 besteht darin, dass die Messzelle 210 nicht direkt mit dem Gestell 22 oder 23, sondern über federnde Kompensationskammern 330 und 340 verbunden ist. Damit werden verbleibende Schwingungen des Gestells 22 oder 23 wirksam unterdrückt, da diese Gestelle 22 oder 23 nicht beliebig steif und schwer ausgeführt werden können.

Die Messzelle 210 kann zumindest für die Zeitdauer der Beobachtung einer Probe 220 direkt mit dem Mikroskoptisch 202 verbunden werden, wenn die Kompensationskammern 330, 340 hinreichend nachgiebig ausgeführt sind.

Wenn die Klemmverbindung zwischen Messzelle 210 und dem Mikroskoptisch 202 gelöst wird, kann die komplette Dämpfungseinheit 300 aus dem Strahlengang des Mikroskopobjektivs 203 zurückgezogen oder herausgeschwenkt werden. Die Messzelle 210 ist dann beispielsweise für das Auswechseln der Probe 220 frei zugänglich.

In weiteren Ausführungen der Erfindung werden die einzeln vorgeschlagenen Dämpfungsmaßnahmen miteinander kombiniert.

Die Wirkung von Dämpfern beruht auf einer geschwindigkeits- und/oder beschleunigungsabhängigen Gegenkraft. In der technischen Umsetzung weisen alle Dämpfungselemente aber auch eine Wegabhängigkeit der Gegenkraft auf. Ein optimaler Arbeitspunkt für das Dämpfungselement ist einzustellen, bei der ein Maximum der Umwandlung von Bewegungsenergie in Wärme bei minimaler Krafteinwirkung auf das Gestell erfolgt.

In einer vorteilhaften Ausführung der Erfindung bewirkt die Spanneinheit eine Kraft und eine Gegenkraft, die unabhängig von den auftretenden Schwingungsamplituden ist.

In einer weiteren vorteilhaften Ausgestaltung der Erfindung werden als Federelemente paarweise angeordnete Kompensationskammern verwendet.

In einer vorteilhaften Ausführung der Erfindung liegen die Wirkachsen aller Feder- und Dämpfungselemente sowie der Schwingungsrichtung des Kryokühlers auf einer gemeinsamen Längsachse. Feder- und Dämpfungselemente sowie die Spanneinheit können aus konstruktiven Gründen auch als Gruppen angeordnet werden. Beispielsweise können sie konzentrisch um die Längsachse angeordnet werden, um ein Kippmoment zu vermeiden.

In einer weiteren vorteilhaften Ausführung der Erfindung ist das Netzwerk von Feder- und Dämpfungselementen zur Befestigung des Kryokühlers symmetrisch mit diametral auf einer gemeinsamen Längsachse liegenden Befestigungsstellen am Gestell aufgebaut.

In einer weiteren vorteilhaften Ausführung der Erfindung werden Kryokühler und Messeinheit jeweils über ein eigenes Netzwerk von Feder- und Dämpfungselementen mit dem Gestell verbunden, wobei mindestens das Netzwerk für die Befestigung des Kryokühlers eine Spanneinheit besitzt.

In einer weiteren vorteilhaften Ausgestaltung der Erfindung sind mindestens ein Koppelverbinder von Feder- und Dämpfungselementen mit einem Schwingungstilger gekoppelt. Die Verbindung zwischen Tilgermasse und Kryokühler ist dabei so weich ausgelegt, dass die Masse des Schwingungstilgers den Bewegungen des Koppelverbinders mit einer gewissen Verzögerung folgt. Der damit einher gehende Energieverbrauch wird der Schwingung entzogen und wirkt damit dämpfend. Eine direkte Krafteinwirkung auf das Gestell erfolgt nicht sondern nur über die Befestigungsstellen des Netzwerkes von Feder- und Dämpfungselementen am Gestell.

Es ist vorteilhaft, die Messzelle zur Vermeidung einer Relativbewegung zwischen Probe und Strahlengang des Mikroskops zumindest für die Zeitdauer der Messung fest mit dem Mikroskoptisch zu verbinden.

**Bezugszeichenliste**

| 1 | Grundplatte |
|---|---|
| 2 | Aufnahmegestell oder Aufnahmerahmen |
| 4 | Balgfeder |
| 5 | Dämpfungselement |
| 6 | Lagerung |
| 7 | evakuierbare Kammer |

| 20 | Instrumentenplattform, Instrumententisch |
|---|---|
| 21 | Längsachse |
| 22 | Gestell (lang) |
| 23 | Gestell (kurz) |
| 24 | Hilfsrahmen |
| 25 | Basisplatte |
| 26 | Basisplatte |
| 27 | Verbindungsprofile |
| 28 | Stützstäbe |
| 29 | Abschlussplatte |

| 60 | Koppelverbinder |
|---|---|
| 61 | Koppelverbinder |
| 62 | Koppelverbinder |
| 63 | Koppelverbinder |
| 64 | Koppelverbinder |
| 65 | Koppelverbinder |
| 66 | Koppelverbinder |
| 67 | Koppelverbinder |
| 68 | Koppelverbinder |
| 69 | Koppelverbinder |

| 71 | Gestellverbinder |
|---|---|
| 72 | Gestellverbinder |
| 73 | Gestellverbinder |
| 75 | Gestellverbinder |
| 76 | Gestellverbinder |
| 77 | Gestellverbinder |
| 78 | Gestellverbinder |

| 100 | Kryokühleinheit oder Kryokühler |
|---|---|
| 101 | Kryokühler-Gehäuse |
| 102 | Kaltkopf |
| 104 | Kälteleiterstab |
| 105 | Kaltleiterflexkupplung |

| 200 | Mikroskopiereinheit |
|---|---|
| 202 | Mikroskoptisch |
| 203 | Mikroskopobjektiv |
| 210 | Messzelle |
| 211 | Messzellenfenster |
| 220 | Probe |

| 300 | Dämpfungseinheit |
|---|---|

| 301 | Einspannstelle |
| 304 | Verbindungsplatte |
| 305 | Dämpfer |
| 310 | Kompensationskammer |
| 311 | Koppelstelle |
| 312 | Koppelstelle |
| 313 | Kompensationskammer |
| 315 | Dämpfer |
| 316 | Dämpfer |
| 320 | Kompensationskammer |
| 321 | Koppelstelle |
| 322 | Koppelstelle |
| 323 | Kompensationskammer |
| 324 | Verbindungsplatte |
| 325 | Dämpfer |
| 326 | Ausgleichsmasse |
| 330 | Kompensationskammer |
| 331 | Koppelstelle |
| 332 | Koppelstelle |
| 340 | Kompensationskammer |
| 341 | Koppelstelle |
| 342 | Koppelstelle |
| 344 | Koppelstelle |
| 344 | Verbindungsplatte |
| 345 | Dämpfer |
| 348 | Einspannstelle |
| 349 | Einspannstelle |
| 350 | Einspannstelle |
| 360 | Schwingungstilger |
| 361 | Tilgermasse |
| 362 | Tilgerfeder |
| 371 | Federelement |
| 372 | Federelement |
| 373 | Federelement |
| 374 | Federelement |
| 375 | Federelement |
| 381 | Dämpfungselement |
| 382 | Dämpfungselement |
| 383 | Dämpfungselement |
| 385 | Dämpfungselement |
| 391 | Masse (Kryokühler) |
| 392 | Ausgleichsmasse |
| 393 | Masse (Messzelle) |
| 394 | Masse (Tilger) |
| 400 | Spanneinheit |
| 401 | Vorspannfeder |
| 402 | Spannschraube |

403     Druckbolzen (lang)
404     Druckbolzen (kurz)
405     Spannelement

$F_{zD}(\omega)$     auf Dämpfungselemente wirkende Kraft
$F_{zK}(\omega)$     auf Federelemente wirkende Kraft
$F_{zS}$     Spannkraft der Spanneinheit
$F_z(\omega)$     Gestellkraft
$F_V$     Vorspannung Dämpfer aus Elastomer
$x_v$     Verformung
$x_z$     zulässige Verformung

**Patentansprüche**

1.   Anordnung für die Dämpfung von Schwingungen bei mikroskopischen Untersuchungen von Proben in einer evakuierten Messzelle bei tiefen Temperaturen, die eine Kryokühleinheit (100) und eine Mikroskopiereinheit (200) umfasst, die mit einer Dämpfungseinheit (300) kombiniert sind,wobei die Dämpfungseinheit (300) entlang einer Längsachse (21) eine Reihenanordnung von vier aneinander gekoppelten evakuierbaren Kompensationskammern (310, 320, 330, 340) aufweist, die an ihren beiden äusseren Enden über Dämpfer mit einem Gestell (22, 23) verbunden sind und wobei die Messzelle (210) mit zwei Kompensationskammern (330, 340) an Koppelstellen (332, 341) verbunden ist, **dadurch gekennzeichnet,**
**dass** eine Spanneinheit (400) an mindestens zwei Stellen der Reihenanordnung wirkmäßig mit der Dämpfungseinheit (300) verbunden ist und dass der Kryokühler (100) an einem Koppelverbinder (312) befestigt ist, der zwei Kompensationskammern (310, 320) miteinander verbindet und jede der beiden Kompensationskammern (310, 320) über jeweils einen weiteren Koppelverbinder (311, 342) und/oder eine Verbindungsplatte (324) mit jeweils einem Dämpfer (305, 324, 345) verbunden ist, der an dem Gestell (22) befestigt ist und die Spanneinheit (400) auf die beiden Koppelverbinder (311,342) wirkt.

2.   Anordnung nach Anspruch 1,
**dadurch gekennzeichnet,**
**dass** die Spanneinheit (400) an Koppelverbindern (304,342) und/oder an mindestens einer Verbindungsplatte (324) wirkmäßig mit der Dämpfungseinheit (300) verbunden ist.

3.   Anordnung nach Anspruch 1,
**dadurch gekennzeichnet,**
**dass** die Spanneinheit (400) hinsichtlich ihrer Spannwirkung auf die diametral wirkenden Dämpfergruppen (305, 325, 345) verstellbar ausgebildet ist.

4.   Anordnung nach einem der Ansprüche 1 bis 3,
**dadurch gekennzeichnet,**
**dass** die Spanneinheit (400) mindestens eine Vorspannfeder (401), Druckbolzen (403, 404) und Spannschraube (402) aufweist.

5.   Anordnung nach einem der Ansprüche 1 bis 4,
**dadurch gekennzeichnet,**
**dass** die Spanneinheit (400) über eine Vorspannfeder (401) verfügt, so dass damit die auf die Koppelverbinder (65, 67, 69) wirkenden Spannkraft ($F_{zS}$) weitgehend unabhängig von den Schwingungsamplituden an den Koppelverbindern (65, 67, 69) ist.

6.   Anordnung nach einem der Ansprüche 1 bis 5,
**dadurch gekennzeichnet, dass** die Koppelstellen (322,331) der beiden Kompensationskammern (310,330), die weder mit dem Kryokühler noch der Messzelle verbunden sind, mit einer Ausgleichsmasse (326) verbunden sind.

7.   Anordnung nach einem der Ansprüche 1 bis 6,
**dadurch gekennzeichnet,**
**dass** die Koppelstelle (322) der Kompensationskammer (320) und die Koppelstelle (331) der Kompensationskammer (330) mit einer Verbindungsplatte (324) verbunden ist, die an einem Hilfsrahmen (24) und an der Vorspannfeder (401) befestigt ist und über einen Dämpfer (325) mit dem Gestell (23) verbunden ist.

8. Anordnung nach einem der Ansprüche 1 bis 7,
   **dadurch gekennzeichnet,**
   **dass** die Dämpfungseinheit (300) eine Reihenanordnung, die von der Längsachse (21) abweichend ausgebildet ist, von über Koppelverbinder (65, 66, 67, 68, 69) verbundene, evakuierbare Kompensationskammern (310, 320, 330, 340) und Dämpfer (305, 325 345) aufweist.

9. Anordnung nach einem der Ansprüche 1 bis 8,
   **dadurch gekennzeichnet,**
   **dass** die Spanneinheit (400) hinsichtlich der auf die Koppelverbinder (65, 67, 69) wirkenden Spannkraft ($F_{zS}$) verstellbar ausgebildet ist.

10. Anordnung nach einem der Ansprüche 1 bis 9,
    **dadurch gekennzeichnet,**
    **dass** ein Koppelverbinder (312) der Reihenanordnung von Kompensationskammern (310, 320, 330, 340) und Dämpfungselementen (305, 325, 345) mit dem Kryokühlergehäuse (101) und ein anderer Koppelverbinder (322, 331) mit einer Ausgleichsmasse (326) verbunden sind.

11. Anordnung nach einem der Ansprüche 1 bis 10,
    **dadurch gekennzeichnet,**
    **dass** mindestens ein Koppelverbinder (311, 312, 323, 342) der Reihenanordnung von Kompensationskammern (310, 320, 330, 340) und Dämpfungselementen (305, 345) mit mindestens einem Schwingungstilger (360), der eine Tilgerfeder (362) und eine frei schwingende Tilgermasse (361) umfasst, verbunden ist.

12. Anordnung nach einem der Ansprüche 1 bis 11,
    **dadurch gekennzeichnet,**
    **dass** die Wandungen der Kompensationskammern (310, 320, 330, 340) als Balgfedern (4) ausgeführt sind, wobei die Balgfedern (4) der ersten und zweiten Kompensationskammer (310, 320) sowie der dritten und vierten Kompensationskammer (330, 340) jeweils paarweise gleiche Querschnitte und Federkonstanten aufweisen.

13. Verfahren zur Dämpfung von Schwingungen bei mikroskopischen Untersuchungen von Proben in einer evakuierten Messzelle bei tiefen Temperaturen, die eine Kryokühleinheit und eine Mikroskopiereinheit umfasst, die mit einer Dämpfungseinheit kombiniert sind, wobei die Dämpfungseinheit entlang einer Längsachse eine Reihenanordnung von vier aneinander gekoppelten evakuierbaren Kompensationskammern aufweist, die an ihren beiden äusseren Enden über Dämpfer, mit einem Gestell verbunden sind , und wobei die Messzelle (210) mit zwei Kompensationskammern (330, 340) an Koppelstellen (332, 341) verbunden ist, **dadurch gekennzeichnet,**
    **dass** mindestens zwei der in Reihe angeordneten Kompensationskammern durch eine Spanneinheit (400) überbrückt werden, durch die Spanneinheit auf Koppelstellen der Reihenanordnung Kräfte ausgeübt werden und die Spanneinheit auf die mit dem Gestell verbundenen Dämpfer wirkt.

14. Verfahren nach Anspruch 13,
    **dadurch gekennzeichnet,**
    **dass** Abmessungen und Material der Dämpfer so bestimmt werden, dass die auf die Dämpfer während des Betriebes der Kryokühleinheit wirkenden dynamischen Kräfte ($F_{zD}(\omega)$) eine Verformung ($x_v$) zwischen minimal 0 bis 20% und maximal 80% - 100% ihrer zulässigen Verformung ($x_z$) bewirken und dass mittels der Spannkraft ($F_{zS}$) bei ausgeschalteter Kryokühleinheit eine Verformung ($x_v$) von 30 bis 70% der zulässigen Verformung ($x_z$) eingestellt wird.

15. Verfahren nach Anspruch 13,
    **dadurch gekennzeichnet,**
    **dass** die Dämpfungseinheit mit einer einstellbaren Vorspannung beaufschlagt wird.

**Claims**

1. Arrangement for damping vibrations during microscopic examinations of specimens in an evacuated measuring cell at low temperatures, which comprises a cryogenic cooling unit (100) and a microscopy unit (200), which are combined with a damping unit (300), the damping unit (300) having along a longitudinal axis (21) a series arranged of four evacuable compensation chambers (310, 320, 330, 340) which are coupled to one another, which are connected to a frame (22, 23) at their two outer ends via dampers, and the measuring cell (210) being connected to two compensation chambers (330, 340) at coupling points (332, 341),

**characterized in that**

a clamping unit (400) is operatively connected to the damping unit (300) at at least two points of the series arrangement, and **in that** the cryogenic cooler (100) is fixed to a coupling connector (312) which connects two compensation chambers (310, 320) to each other, and each of the two compensation chambers (310, 320) is connected via respectively one further coupling connector (311, 342) and/or a connecting plate (324) to respectively one damper (305, 324, 345), which is fixed to the frame (22), and the clamping unit (400) acts on the two coupling connectors (311, 342).

2. Arrangement according to Claim 1,

**characterized in that**

the clamping unit (400) is operatively connected to the damping unit (300) at coupling connectors (304, 342) and/or at at least one connecting plate (324).

3. Arrangement according to Claim 1,

**characterized in that**

the clamping unit (400) is designed to be adjustable with regard to its clamping action on the diametrically acting damper groups (305, 325, 345).

4. Arrangement according to one of Claims 1 to 3,

**characterized in that**

the clamping unit (400) has at least one preloading spring (401), pressure plate (403, 404) and clamping screw (402).

5. Arrangement according to one of Claims 1 to 4,

**characterized in that**

the clamping unit (400) has a preloading spring (401), so that the clamping force ($F_{zS}$) therefore acting on the coupling connectors (65, 67, 69) is largely independent of the vibration amplitudes on the coupling connectors (65, 67, 69) .

6. Arrangement according to one of Claims 1 to 5,

**characterized in that**

the coupling points (322, 331) of the two compensation chambers (310, 330) which are connected neither to the cryogenic cooler nor the measuring cell are connected to a balancing mass (326).

7. Arrangement according to one of Claims 1 to 6,

**characterized in that**

the coupling point (322) of the compensation chamber (320) and the coupling point (331) of the compensation chamber (330) are connected to a connecting plate (324), which is fixed to an auxiliary frame (24) and to the preloading spring (401) and is connected to the frame (23) via a damper (325) .

8. Arrangement according to one of Claims 1 to 7,

**characterized in that**

the damping unit (300) has a series arrangement, which is formed so as to deviate from the longitudinal axis (21), of evacuable compensation chambers (310, 320, 330, 340) and dampers (305, 325, 345) connected via coupling connectors (65, 66, 67, 68, 69).

9. Arrangement according to one of Claims 1 to 8,

**characterized in that**

the clamping unit (400) is designed to be adjustable with regard to the clamping force ($F_{zS}$) acting on the coupling connectors (65, 67, 69).

10. Arrangement according to one of Claims 1 to 9,

**characterized in that**

a coupling connector (312) of the series arrangement of compensation chambers (310, 320, 330, 340) and damping elements (305, 325, 345) is connected to the cryogenic cooler housing (101), and another coupling connector (322, 331) is connected to a balancing mass (326).

**11.** Arrangement according to one of Claims 1 to 10,
**characterized in that**
at least one coupling connector (311, 312, 323, 342) of the series arrangement of compensation chambers (310, 320, 330, 340) and damping elements (305, 345) is connected to at least one vibration absorber (360), which comprises an absorber spring (362) and a freely vibrating absorber mass (361).

**12.** Arrangement according to one of Claims 1 to 11,
**characterized in that**
the walls of the compensation chambers (310, 320, 330, 340) are implemented as bellows springs (4) wherein the bellows springs (4) of the first and second compensation chamber (310, 320) and the third and fourth compensation chamber (330, 340) each have the same cross sections and spring constants in pairs.

**13.** Method for damping vibrations during microscopic examinations of specimens in an evacuated measuring cell at low temperatures, which comprises a cryogenic cooling unit and a microscopy unit, which are combined with a damping unit, the damping unit having along a longitudinal axis a series arranged of four evacuable compensation chambers which are coupled to one another, which are connected to a frame at their two outer ends via dampers, and the measuring cell (210) being connected to two compensation chambers (330, 340) at coupling points (332, 341),
**characterized in that**
at least two of the compensation chambers arranged in series are bridged by a clamping unit (400),
forces can be exerted by the clamping unit at coupling points of the series arrangement, and
the clamping unit acts on the dampers connected to the frame.

**14.** Method according to Claim 13,
**characterized in that**
dimensions and material of the dampers are determined such that the dynamic forces ($F_{zD(\omega)}$) acting on the dampers during the operation of the cryogenic cooling unit effect a deformation ($x_v$) between a minimum of 0% to 20% and a maximum of 80% - 100% of their permissible deformation ($x_z$), and **in that** when the cryogenic cooling unit is switched off, a deformation ($x_v$) of 30% to 70% of the permissible deformation ($X_z$) is set by means of the clamping force ($F_{zS}$).

**15.** Method according to Claim 13,
**characterized in that**
an adjustable pre-load is applied to the damping unit.

**Revendications**

**1.** Dispositif d'amortissement de vibrations dans les examens microscopiques d'échantillons dans une cellule de mesure sous vide à basses températures, ledit dispositif comprenant une unité de refroidissement cryogénique (100) et une unité de microscopie (200) qui sont combinées à une unité d'amortissement (300), l'unité d'amortissement (300) comprenant le long d'un axe longitudinal (21) un agencement en série de quatre chambres de compensation (310, 320, 330, 340) qui sont mises sous vide et qui sont reliées au niveau de leurs deux extrémités extérieures à un support (22, 23) par le biais d'amortisseurs et la cellule de mesure (210) étant reliée aux deux chambres de compensation (330, 340) au niveau de points d'accouplement (332, 341),
**caractérisé en ce que**
une unité de serrage (400) est reliée fonctionnellement à l'unité d'amortissement (300) en au moins deux points de l'agencement en série et **en ce que** l'unité de refroidissement cryogénique (100) est fixée à un connecteur d'accouplement (312) qui relie les deux chambres de compensation (310, 320) entre elle et **en ce que** chacune des deux chambres de compensation (310, 320) est reliée par le biais d'un connecteur d'accouplement supplémentaire (311, 342) et/ou d'une plaque de liaison (324) à un amortisseur (305, 324, 345) qui est fixé au support (22) et **en ce que** l'unité de serrage (400) agit sur les deux connecteurs d'accouplement (311, 342).

**2.** Dispositif selon la revendication 1,
caractérisé ce que
l'unité de serrage (400) est reliée fonctionnellement à l'unité d'amortissement (300) au niveau de connecteurs d'accouplement (304, 342) et/ou au niveau d'au moins une plaque de liaison (324).

**3.** Dispositif selon la revendication 1,

caractérisé ce que
l'unité de serrage (400) est conçue pour être déplaçable quant à son effet de serrage sur les groupes d'amortissement (305, 325, 345) agissant diamétralement.

4. Dispositif selon l'une des revendications 1 à 3,
**caractérisé en ce que**
l'unité de serrage (400) comprend au moins un ressort de précontrainte (401), des broches de pression (403, 404) et une vis de serrage (402).

5. Dispositif selon l'une des revendications 1 à 4,
**Caractérisé en ce que**
l'unité de serrage (400) dispose d'un ressort de précontrainte (401) de telle sorte que la force de serrage ($F_{zS}$) agissant sur le connecteur d'accouplement (65, 67, 69) est dans une large mesure indépendante des amplitudes de vibration au niveau des connecteurs d'accouplement (65, 67, 69).

6. Dispositif selon l'une des revendications 1 à 5,
**caractérisé en ce que**
les points d'accouplement (322, 331) des deux chambres de compensation (310, 330) qui sont reliées ni au dispositif de refroidissement cryogénique ni à la cellule de mesure, sont reliés à une masse d'équilibrage (326).

7. Dispositif selon l'une des revendications 1 à 6,
**caractérisé en ce que**
le point d'accouplement (322) de la chambre de compensation (320) et le point d'accouplement (331) de la chambre de compensation (330) sont reliés avec une plaque de liaison (324) qui est fixée à un cadre auxiliaire (24) et au ressort de précontrainte (401) et est reliée au support (23) par le biais d'un amortisseur (325) .

8. Dispositif selon l'une des revendications 1 à 7,
**caractérisé en ce que**
l'unité d'amortissement (300) comprend un agencement en série qui est conçu de manière à s'écarter de l'axe longitudinal (21) et qui comporte des chambres de compensation (310, 320, 330, 340) et des amortisseurs (305, 325, 345) qui sont reliés par le biais de connecteurs d'accouplement (65, 66, 67, 68, 69).

9. Dispositif selon l'une des revendications 1 à 8,
**caractérisé en ce que**
l'unité de serrage (400) est conçue pour être déplaçable quant à sa force de serrage ($F_{zS}$) agissant sur les connecteurs d'accouplement (65, 67, 69).

10. Dispositif selon l'une des revendications 1 à 9,
**caractérisé en ce que**
un connecteur d'accouplement (312) de l'agencement en série de chambres de compensation (310, 320, 330, 340) et d'éléments d'amortissement (305, 325, 345) est relié au boîtier (101) du dispositif de refroidissement cryogénique et un autre connecteur d'accouplement (322, 331) est relié à une masse d'équilibrage (326) .

11. Dispositif selon l'une des revendications 1 à 10,
**caractérisé en ce que**
au moins un connecteur d'accouplement (311, 312, 323, 342) de l'agencement en série de chambres de compensation (310, 320, 330, 340) et d'éléments d'amortissement (305, 345) est relié à au moins un amortisseur de vibrations (360) qui comprend un ressort d'amortisseur (362) et une masse d'amortisseur vibrante (361) .

12. Dispositif selon l'une des revendications 1 à 11,
**caractérisé en ce que**
les parois des chambres de compensation (310, 320, 330, 340) sont réalisées sous la forme de ressort à soufflet (4), les ressorts à soufflet (4) des première et deuxième chambres de compensation (310, 320) et des troisième et quatrième chambres de compensation (330, 340) présentent chacun des sections transversales et des constantes de ressort identiques par paire.

13. Procédé d'amortissement de vibrations dans les examens microscopiques d'échantillons dans une cellule de mesure sous vide à basses températures, au moyen d'un dispositif comprenant une unité de refroidissement cryogénique et une unité de microscopie qui sont combinées à une unité d'amortissement, l'unité d'amortissement comprenant le long d'un axe longitudinal un agencement en série de quatre chambres de compensation qui sont mises sous vide et qui sont reliées au niveau de leurs deux extrémités extérieures à un support par le biais d'amortisseurs et la cellule de mesure (210) étant reliée aux deux chambres de compensation (330, 340) au niveau de points d'accouplement (332, 341),

**caractérisé en ce que**

au moins deux des chambres de compensation disposées en série sont pontées par une unité de serrage (400), des forces sont exercées par l'unité de serrage sur les points d'accouplement de l'agencement en série et l'unité de serrage agit sur les amortisseurs reliés au support.

**14.** Procédé selon la revendication 13,

**caractérisé en ce que**

les dimensions et la matière des amortisseurs sont déterminées de telle sorte que les forces dynamiques ($F_{zD}(\omega)$) agissant sur les amortisseurs pendant le fonctionnement de l'unité de refroidissement cryogénique provoquent une déformation ($x_v$) entre un minimum de 0 à 20 % et un maximum de 80 % à 100 % de leur déformation admissible ($x_z$), et **en ce qu'**une déformation ($x_v$) de 30 à 70 % de la déformation admissible ($x_z$) est réglée au moyen de la force de serrage ($F_{zS}$) lorsque l'unité de refroidissement cryogénique est déconnectée.

**15.** Procédé selon la revendication 13,

**caractérisé en ce que**

l'unité d'amortissement est soumise à une précontrainte réglable.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

EP 2 903 709 B1

Fig. 17

33

EP 2 903 709 B1

**IN DER BESCHREIBUNG AUFGEFÜHRTE DOKUMENTE**

**In der Beschreibung aufgeführte Patentdokumente**

- US 4161747 A
- US 4745761 A
- US 4394819 A
- AT 001975
- US 5582013 A
- US 6131394 A
- DE 3916032
- DE 19510620
- EP 160808 A
- US 4363217 A
- US 20100050661 A